(19) Europäisches Patentamt
European Patent Office
Office européen des brevets

(11) EP 3 753 992 A1

(12) EUROPEAN PATENT APPLICATION

(43) Date of publication:
**23.12.2020 Bulletin 2020/52**

(21) Application number: **20180253.5**

(22) Date of filing: **16.06.2020**

(51) Int Cl.:
***C09J 11/04*** *(2006.01)*
***C09J 7/29*** *(2018.01)*
***C08K 3/00*** *(2018.01)*
***C09J 9/00*** *(2006.01)*
***C08K 3/22*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.06.2019 JP 2019115438**

(71) Applicant: **Nitto Denko Corporation**
**Ibaraki-shi, Osaka 567-8680 (JP)**

(72) Inventors:
- **SUZUKI, Tatsuya**
  **Ibaraki-shi,, Osaka 567-8680 (JP)**
- **YOKOYAMA, Junji**
  **Ibaraki-shi,, Osaka 567-8680 (JP)**
- **HIRAO, Akira**
  **Ibaraki-shi,, Osaka 567-8680 (JP)**

(74) Representative: **Müller-Boré & Partner Patentanwälte PartG mbB**
**Friedenheimer Brücke 21**
**80639 München (DE)**

# (54) TRANSPARENT PRESSURE-SENSITIVE ADHESIVE SHEET

(57) The provided pressure-sensitive adhesive sheet includes a substrate, a pressure-sensitive adhesive layer laminated on a first surface of the substrate, and a metal mesh layer disposed between the substrate and the pressure-sensitive adhesive layer.

[Fig 1]

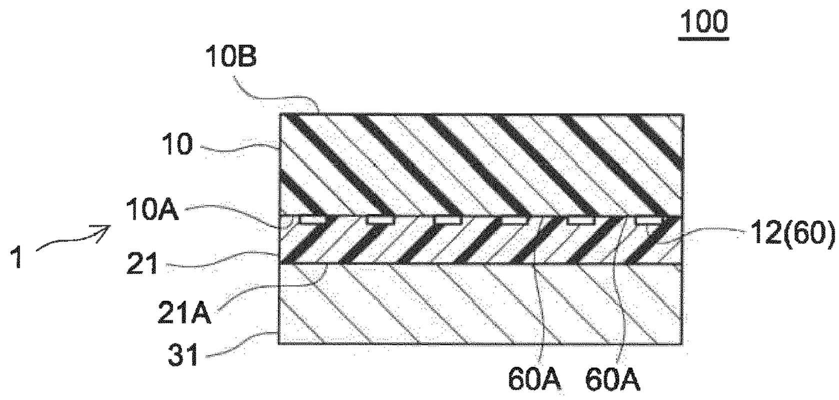


EP 3 753 992 A1

## Description

The present invention relates to a pressure-sensitive adhesive sheet.

As electronic apparatuses equipped with electronic devices (for example, semiconductor elements) become more sophisticated, the amount of heat generated by the electronic devices and the like tends to increase. For this reason, the importance of designing electronic device products and the like having heat dissipation ability is increasing.

As a method for improving the heat dissipation of a product, it is known to provide a heat dissipation sheet inside the product. For example, Japanese Patent Application Publication No. 2018-171916 discloses using, as a heat dissipation sheet, a foam composite having a resin foam sheet including a thermally conductive filler, a conductive sheet having one surface bonded to the resin foam sheet through a pressure-sensitive adhesive (PSA) layer, and a conductive PSA layer provided on the other surface of the conductive sheet.

In the conventional heat dissipation sheet, the transparency of the heat dissipation sheet is not considered. For example, the foam composite disclosed in Japanese Patent Application Publication No. 2018-171916 includes, as an essential component, a resin foam sheet including a thermally conductive filler, and therefore lacks transparency. Conductive nonwoven fabrics, metal foils, conductive resin films having a metal film on a resin film, and the like, which are mentioned as specific examples of the conductive sheet in the foam composite of Japanese Patent Application Publication No. 2018-171916, are constituent components that also impair transparency, and it is clear that this is also a reason why the transparency is not considered in Japanese Patent Application Publication No. 2018-171916.

Therefore, an object of the present invention is to provide a PSA sheet having both heat dissipation and transparency. Another related object is to provide an electronic apparatus provided with such a PSA sheet.

The PSA sheet provided by this specification includes a substrate, a PSA layer laminated on the first surface of the substrate, and a metal mesh layer disposed between the substrate and the PSA layer. With the PSA sheet having such a configuration, satisfactory heat dissipation can be exhibited by using the thermal conductivity of the metal constituting the metal mesh layer. In addition, since the metal mesh layer has a mesh structure having a plurality of openings, the PSA sheet makes it possible to achieve suitably both the satisfactory heat dissipation and the transparency in the thickness direction.

In some embodiments of the PSA sheet disclosed herein, a layer including copper can be preferably used as the metal mesh layer. The metal mesh layer made of a material including copper can be advantageous in terms of, for example, thermal conductivity, flexibility, durability against deformation, and the like.

In some embodiments of the PSA sheet disclosed herein, the PSA layer may include a thermally conductive filler. By including a thermally conductive filler in the PSA layer, heat supplied to the PSA layer can be efficiently transmitted to the metal mesh layer, and can be dissipated through the metal mesh layer.

In an embodiment in which the PSA layer includes a thermally conductive filler, the difference between the refractive index of the PSA layer and the refractive index of the thermally conductive filler is preferably, for example, within a range of $\pm 0.04$. With the PSA sheet in which the refractive index difference between the PSA layer and the thermally conductive filler is within the above range, a decrease in transparency due to the use of the thermally conductive filler is suppressed, and it is possible to realize a PSA sheet with a satisfactory balance between heat dissipation and transparency.

The amount of the thermally conductive filler in the PSA layer can be, for example, 70% by weight or less. By providing the PSA sheet disclosed herein with the metal mesh layer, it is possible to exhibit high heat dissipation even in an embodiment in which the amount of the thermally conductive filler is thus limited.

As the thermally conductive filler, for example, a hydrated metal compound can be preferably used. Since hydrated metal oxides generally have relatively low hardness, selecting a hydrated metal compound as the thermally conductive filler can be advantageous from the viewpoint of preventing damage to the metal mesh layer due to contact with the thermally conductive filler.

In the PSA sheet according to some preferred embodiments, the ratio (TA/TM) of the thickness TA [$\mu$m] of the PSA layer to the thickness TM [$\mu$m] of the metal mesh layer is 3.0 or more. With the PSA sheet having a large ratio (TA/TM), the metal mesh layer and the PSA layer are easily and satisfactorily adhered to each other. In addition, due to the large TA/TM, even if the PSA sheet is exposed to, for example, deformation or temperature change, the above-mentioned satisfactory adhesion state can be easily maintained. This is preferable from the viewpoint of heat dissipation and stability of performance (for example, heat dissipation performance) of the PSA sheet.

A resin film can be preferably used as the substrate of the PSA sheet disclosed herein. By using a resin film as the substrate, a PSA sheet having both heat dissipation and transparency can be suitably realized.

The PSA sheet according to some preferred embodiments has a haze value of 50% or less. According to this specification, it is possible to provide a PSA sheet having both heat dissipation and satisfactory transparency such that the haze value is 50% or less.

According to this specification, an electronic apparatus including any of the PSA sheets disclosed herein is provided. Thus, the electronic apparatus may have improved heat dissipation. The electronic apparatus may be, for

example, a display apparatus. Since the PSA sheet disclosed herein has both heat dissipation and transparency, it can be preferably used for heat dissipation of display apparatuses.

FIG. 1 is a schematic cross-sectional view showing the configuration of the PSA sheet according to one embodiment;
FIG. 2 is a plan view showing a planar shape of a metal mesh layer constituting the PSA sheet of FIG. 1;
FIG. 3 is a plan view showing another example of the planar shape of the metal mesh layer;
FIG. 4 is a plan view showing still another example of the planar shape of the metal mesh layer; and
FIG. 5 is an explanatory view schematically showing a method for evaluating heat dissipation.

Preferable embodiments of the present invention are described below. Matters necessary to practice this invention other than those specifically referred to in this description can be understood by a person skilled in the art based on the disclosure about implementing the invention in this description and common technical knowledge at the time the application was filed. The present invention can be practiced based on the contents disclosed in this description and common technical knowledge in the subject field.

In the following drawings, components or units having the same functions may be described with the same symbols allocated and the redundant description may be omitted or simplified. The embodiments illustrated in the drawings are schematic in order to clearly describe the present invention and the drawings do not accurately represent the size or scale of products actually provided.

As used herein, the term "acrylic polymer" refers to a polymer having a monomeric unit derived from a (meth)acrylic monomer in the polymer structure and typically refers to a polymer containing over 50% by weight monomeric units derived from a (meth)acrylic monomer. The term "(meth)acrylic monomer" refers to a monomer having at least one (meth)acryloyl group in one molecule. In this context, it is intended that the term "(meth)acryloyl group" collectively refers to an acryloyl group and a methacryloyl group. Therefore, the concept of "(meth)acrylic monomer" as used herein may encompass both an acrylic monomer having an acryloyl group and a methacrylic monomer having a methacryloyl group. Similarly, it is intended that the term "(meth)acrylic acid" as used herein collectively refers to acrylic acid and methacrylic acid and the term "(meth)acrylate" collectively refers to an acrylate and a methacrylate.

In this specification, the term "active energy ray" refers to an energy ray having energy capable of inducing a chemical reaction such as a polymerization reaction, a crosslinking reaction, and decomposition of an initiator. Examples of the active energy rays referred to herein include light such as ultraviolet rays (UV), visible light, and infrared rays, and radiation such as $\alpha$ rays, $\beta$ rays, $\gamma$ rays, electron beams, neutron rays, and X rays.

In addition, the concept of the PSA sheet referred to herein may include what is called a PSA tape, a PSA film, a PSA label, or the like. The PSA sheet may be in a roll form or a single-sheet form, and may be cut or punched into an appropriate shape according to the application or the manner of use.

Structural Example of PSA Sheet

FIG. 1 is a cross-sectional view schematically showing a PSA sheet according to one embodiment, and FIG. 2 is a plan view showing a metal mesh layer which is one of components of the PSA sheet. The PSA sheet of this embodiment will be described hereinbelow with reference to the drawings.

As shown in FIG. 1, a PSA sheet 1 according to this embodiment is configured of a one-side PSA sheet including a sheet-shaped substrate 10 having a first surface 10A and a second surface 10B, and a PSA layer 21 laminated on the first surface 10A of the substrate 10. The PSA sheet 1 further includes a metal mesh layer 12 disposed between the substrate 10 and the PSA layer 21. The metal mesh layer 12 is typically made of a material having higher thermal conductivity than at least the PSA layer 21. The metal mesh layer 12 has a predetermined pattern (mesh pattern) 60. It is preferable that the PSA layer 21 be in direct contact with the first surface 10A of the substrate 10 at a plurality of openings (through holes) 60A of the mesh pattern 60.

The PSA sheet 1 thus configured is typically used by sticking the surface (PSA surface) 21A side of the PSA layer 21 to an adherend. The adherend can be, for example, a heat-generating element such as a light source such as a light emitting diode (LED) or an organic light emitting diode (OLED), or a member to which heat of the heat-generating element is transmitted, for example, a heat sink attached to the heat-generating element. The heat supplied to the PSA sheet 1 from the outside propagates through the PSA sheet 1 and reaches the metal mesh layer 12. For example, the heat of the adherend is transmitted to the metal mesh layer 12 through the PSA layer 21 attached to the adherend. The heat transmitted to the metal mesh layer 12 is transmitted in the in-plane direction along the metal mesh layer 12 and is released from the end portion of the PSA sheet 1. As described above, heat conduction in the in-plane direction can be efficiently performed by using the metal mesh layer 12 disposed between the substrate 10 and the PSA layer 21, so that the PSA sheet 1 can demonstrate good heat dissipation.

From the viewpoint of efficiently releasing heat from the end portion of the PSA sheet 1, it is preferable that the end of the mesh pattern 60 be exposed to the outside on the end surface of the PSA sheet 1. From the viewpoint of

promoting the heat release from the end surface of the PSA sheet 1, it is preferable that the PSA sheet 1 be used in the form such that the end surface is in direct contact with a heat conductor such as a housing of an electronic apparatus or in contact through a member having good thermal conductivity (for example, a metal foil).

The mesh pattern 60 of this embodiment is a rectangular lattice pattern as schematically shown in FIG. 2 in a plan view of the metal mesh layer 12. More specifically, the mesh pattern 60 is configured of a first stripe-shaped pattern portion 70 and a second stripe-shaped pattern portion 80 arranged so as to intersect the first stripe-shaped pattern portion 70.

The first stripe-shaped pattern portion 70 is configured of a plurality of elongated portions (band-shaped portions) 75A extending linearly, and the plurality of elongated portions 75A are arranged at intervals in parallel in the width direction thereof. Similarly to the first stripe-shaped pattern portion 70, the second stripe-shaped pattern portion 80 is also composed of a plurality of elongated portions (band-shaped portions) 85A extending linearly, and the plurality of elongated portions 85A are arranged at intervals in parallel in the width direction thereof. In this specification, the "elongated portion" is used to mean a portion having a longitudinal direction and a width direction (a direction orthogonal to the longitudinal direction), and is typically a portion extending in a band shape, regardless whether the shape thereof is linear or curved. The elongated portion can be renamed as a linearly extending portion.

The mesh pattern 60 may have, in a plan view, a shape formed so that the first stripe-shaped pattern portion 70 and the second stripe-shaped pattern portion 80 intersect each other. Therefore, the intersection of the elongated portions 75A constituting the first stripe-shaped pattern portion 70 and the elongated portions 85A constituting the second stripe-shaped pattern portion 80 may have a structure in which the elongated portions 75A and the elongated portions 85A are stacked and may be shared by both elongated portions 75A and 85A. The intersection between the elongated portion 75A and the elongated portion 85A may have substantially the same thickness as a part other than the intersection, and may be thicker or thinner than the part other than the intersection. From the viewpoint of the smoothness of the PSA surface and the like, in some embodiments, a configuration in which the intersections and the parts other than the intersection have substantially the same thickness can be preferably used.

In the metal mesh layer 12 shown in FIG. 2, the elongated portions 75A and 85A are linear, but the present invention is not limited to such a configuration. Each elongated portion may extend in a curved line or a broken line. In that case, the stripe-shaped pattern that can be formed by the plurality of elongated portions may be wavy or the like. Examples of the wave shape include a curved shape such as a sine wave, a pseudo sine wave, and an arc wave, and a non-curved shape such as a zigzag shape and a triangular wave. The mesh pattern configured using a wavy pattern may have, in a plan view, a form in which, for example, two or more types of waves of the same shape or different shapes are combined in a state where their phases are shifted or the shape or pattern is inverted.

In this specification, the lattice pattern typically refers to a pattern including two stripe-shaped pattern portions that intersect with each other, and is inclusive of not only a square lattice as shown in FIG. 2, but also of various lattice shapes such as a perpendicular lattice, e.g., orthogonal lattice or rectangular lattice, and also a hexagonal lattice and a triangular lattice, for example, such as a mesh pattern 160 shown in FIG. 3. Where the elongated portion is linear, the intersection angle (the acute angle side) of the two stripe-shaped pattern portions can be set in the range of 10 degrees to 90 degrees (preferably 45 degrees to 90 degrees, typically 60 degrees to 90 degrees). Further, as described above, the lattice pattern disclosed herein is also assumed to be inclusive of a pattern including a stripe-shaped pattern portion composed of a plurality of elongated portions having repeated bending sections, for example, a pattern such as a hexagonal lattice or a triangular lattice. In such a pattern, adjacent elongated portions can be partially connected.

The metal mesh layer in the PSA sheet disclosed herein is not limited to the one having a mesh pattern with elongated portions as described above. The metal mesh layer may have, for example, a sea-island pattern, such as a mesh pattern 260 shown in FIG. 4. In the mesh pattern 260 shown in FIG. 4, the sea part 262 is typically a film made of a metal material, and the island parts 264 are openings formed in the film. Such a sea-island pattern can typically be understood as a porous metal film in which a plurality of through holes is provided in a metal film. The arrangement of the island parts in the sea-island pattern may be regular as shown in FIG. 4 or may be random.

For example, as shown in FIG. 1, the PSA sheet 1 before use (that is, before attached to an adherend) may be a constituent element of a release-lined PSA sheet (PSA product) 100 in the form where a surface (PSA surface) 21A of the PSA layer 21 is in contact with a release liner 31 having a releasable surface (release surface) at least on a side facing the PSA layer 21. For example, a release liner configured by providing a release layer made of a known release treatment agent such as a silicone-based release treatment agent on one surface of a sheet-shaped substrate (liner substrate), so that the one surface becomes a release surface can be preferably used as the release liner 31. Alternatively, it is possible to omit the release liner 31, use a substrate 10 in which a second surface 10B serves as a release surface, and wound the PSA sheet 1 to obtain a form (roll form) in which the PSA surface 21A is brought into contact with the second surface 10B of the substrate 10. When attaching the PSA sheet 1 to an adherend, the release liner 31 or the second surface 10B of the substrate 10 is peeled off from the PSA surface 21A, and the exposed PSA surface 21A is press-bonded to the adherend.

The PSA sheet disclosed herein is not limited to a single-sided PSA sheet such as the PSA sheet 1 shown in

FIG. 1. For example, a double-sided PSA sheet embodiment is possible in which in addition to the PSA layer laminated on the first surface of the substrate, with a metal mesh layer being interposed therebetween, a PSA layer is also laminated on the second surface of the substrate which is a non-releasable surface. Such a double-sided PSA sheet is used by attaching the first PSA layer laminated on the first surface of the substrate, and the second PSA layer laminated on the second surface of the substrate at different locations of an adherend. The locations where the first and second PSA layers are attached may be respective locations of different members, or may be different locations within a single member. A metal mesh layer may or may not be disposed between the substrate and the second PSA layer. In some embodiments, from the viewpoint of the transparency of the PSA sheet, a configuration in which a metal mesh layer is not disposed between the substrate and the second PSA layer can be preferably used.

Substrate

The substrate of the PSA sheet disclosed herein is not particularly limited, and for example, a resin film, a rubber sheet, paper, glass, a composite thereof, or the like can be used. Preferred examples from the viewpoint of flexibility and durability include a resin film and a rubber sheet. In some embodiments, a substrate including a resin film capable of maintaining the shape thereof independently (self-supporting or independent resin film) can be preferably used. Here, the "resin film" means a (voidless) resin film having a non-porous structure and typically including substantially no air bubbles. Therefore, the resin film is a concept to be distinguished from a foam or a nonwoven fabric. The resin film may have a single-layer structure or a multilayer structure of two or more layers (for example, a three-layer structure).

Examples of a resin material constituting the resin film include polyesters, polyolefins, polyamides (PA) such as Nylon 6, Nylon 66, and partially aromatic polyamides, polyimides (PI), polyamideimides (PAI), and polyetheretherketone (PEEK), polyether sulfones (PES), polyphenylene sulfide (PPS), polycarbonates (PC), polyurethanes (PU), ethylene-vinyl acetate copolymer (EVA), fluorine resins such as polytetrafluoroethylene (PTFE), acrylic resins, and resins such as polyacrylates, polystyrenes, polyvinyl chloride, and polyvinylidene chloride. The resin film may be formed using a resin material including only one kind of such resins, or may be formed using a resin material in which two or more kinds are blended. The resin film may be unstretched or stretched (for example, uniaxially stretched or biaxially stretched).

Preferable examples of the resin material constituting the resin film include a polyester-based resin, a PPS resin and a polyolefin-based resin. Here, the polyester-based resin refers to a resin including a polyester in a proportion exceeding 50% by weight. Similarly, a PPS resin refers to a resin including PPS in a proportion exceeding 50% by weight, and a polyolefin-based resin refers to a resin including a polyolefin in a proportion exceeding 50% by weight.

Specific examples of the polyester-based resin include polyethylene terephthalate (PET), polybutylene terephthalate (PBT), polyethylene naphthalate (PEN), polybutylene naphthalate, and the like.

As the polyolefin-based resin, one kind of polyolefin can be used alone or two or more kinds of polyolefins can be used in combination. Examples of the polyolefin resin film include an unstretched polypropylene (CPP) film, a biaxially stretched polypropylene (OPP) film, a low-density polyethylene (LDPE) film, a linear low-density polyethylene (LLDPE) film, a medium-density polyethylene (MDPE), a high-density polyethylene (HDPE) film, a polyethylene (PE) film in which two or more types of polyethylene (PE) are blended, and a PP/PE blend film in which polypropylene (PP) and polyethylene (PE) are blended.

Specific examples of the resin film that can be preferably used as the substrate of the PSA sheet disclosed herein include a PET film, a PEN film, a PPS film, a PEEK film, a CPP film, and an OPP film. Preferred examples from the viewpoint of strength and heat resistance include a PET film, a PEN film, a PPS film, and a PEEK film. A PET film and a PPS film are preferable from the viewpoint of availability of the substrate and the like. A PET film is particularly preferable in terms of dimensional stability and transparency.

As long as the effects of the present invention are not significantly impaired, known additives that can be used for the substrate of a PSA sheet, such as light stabilizers, antioxidants, antiaging agents, heat stabilizers, coloring agents such as pigments and dyes, lubricants, fillers, antistatic agents, slip agents, anti-blocking agents, and the like may be compounded with resin film. The compounding amount of the additive is not particularly limited, and can be set, as appropriate, according to the configuration and application of the PSA sheet.

A method for producing the resin film is not particularly limited. For example, conventionally known general resin film molding methods such as extrusion molding, inflation molding, T-die cast molding, and calendar roll molding can be used as appropriate.

The substrate may be substantially composed of such a resin film. Alternatively, the substrate may include an auxiliary layer in addition to the resin film. Examples of the auxiliary layer include surface treatment agents such as an optical property adjusting layer (for example, a coloring layer and an antireflection layer), a printing layer and a laminate layer for giving a desired appearance to a substrate, an antistatic layer, a priming agent layer, and a release layer.

Conventionally known surface treatment methods such as corona discharge treatment, plasma treatment, ultraviolet irradiation treatment, acid treatment, alkali treatment, application of a priming agent (primer), and antistatic treatment may be performed, as necessary, on the first surface of the substrate. Such a surface treatment can help to

improve the adhesion between the first surface of the substrate and the PSA layer or metal mesh layer laminated on the first surface. The composition of the priming agent is not particularly limited, and can be appropriately selected from known ones. The thickness of the priming agent layer is not particularly limited, but is usually about 0.01 μm to 1 μm, and preferably about 0.1 μm to 1 μm.

In the case of a single-sided PSA sheet, a conventionally known surface treatment such as a release treatment or an antistatic treatment may be performed, as necessary, on the second surface of the substrate. For example, by subjecting the back surface of the substrate to a surface treatment with a release treatment agent (typically, by providing a release layer with the release treatment agent), a force required for unwinding the PSA sheet wound in a roll shape can be reduced. As the release agent, a silicone-based release agent, a long-chain alkyl-based release agent, an olefin-based release agent, a fluorine-based release agent, a fatty acid amide-based release agent, molybdenum sulfide, silica powder, or the like can be used. Further, the second surface of the substrate may be subjected to a treatment such as corona discharge treatment, plasma treatment, ultraviolet irradiation treatment, acid treatment, and alkali treatment for the purpose of improving printability, reducing light reflectivity, and improving lamination property. Furthermore, in the case of a double-sided PSA sheet, the second surface of the substrate may be subjected, as necessary, to the same surface treatment as that exemplified above as a surface treatment that can be performed on the first surface of the substrate. The surface treatment applied to the first surface of the substrate and the surface treatment applied to the second surface may be the same or different.

The thickness of the substrate is not particularly limited, and can be selected according to the purpose, form, and the like. From the viewpoints of handleability and workability of the PSA sheet, the thickness of the substrate is usually suitably 2 μm or more, and may be more than 5 μm or more than 10 μm. The PSA sheet disclosed herein can dissipate heat using heat transfer in the in-plane direction by the metal mesh layer disposed between the PSA layer and the substrate, so that heat dissipation performance is not likely to be impaired even if the thickness of the substrate is made large. Taking advantage of such features, the PSA sheet disclosed herein can be preferably implemented even in embodiments in which the thickness of the substrate is relatively large, for example, embodiments in which the thickness of the substrate is 20 μm or more, 35 μm or more, 55 μm or more, 75 μm or more, or 90 μm or more. In addition, from the viewpoint of the transparency of the PSA sheet, the thickness of the substrate is usually appropriately 2000 μm or less, and may be 1000 μm or less, or may be 500 μm or less. The PSA sheet disclosed herein can be preferably implemented in embodiments in which the thickness of the substrate is 300 μm or less, 250 μm or less, 200 μm or less, or 150 μm or less.

Metal Mesh Layer

As a constituent material of the metal mesh layer, a metal such as copper, silver, gold, aluminum, zinc, nickel, platinum, iron, tin, or an alloy including such metal as a main component can be used. In some embodiments, a material including copper may be preferably used as a constituent material of the metal mesh layer. With the metal mesh layer having such a composition, good thermal conductivity is easily obtained. Further, a metal mesh layer made of a material including copper may be advantageous from the viewpoint of flexibility, durability against deformation, and the like. Preferred examples of the material including copper include copper and copper alloys. A metal mesh layer made of copper or a copper alloy including 50% by weight or more of copper (preferably 80% by weight or more, more preferably 90% by weight or more, for example, 95% by weight or more) is preferable.

The mesh pattern of the metal mesh layer may be, for example, a lattice pattern as shown in FIGS. 2 and 3 or a sea-island pattern as shown in FIG. 4.

In the mesh pattern 60 shown in FIG. 2, the width W1 of each of the elongated portions 75A and 85A is not particularly limited, and can be set so that the PSA sheet 1 can exhibit desired properties. In some embodiments, the width W1 of the elongated portion may be, for example, 1 μm or more, and is usually suitably more than 3 μm, more than 5 μm, or more than 7 μm. By increasing the width W1 of the elongated portion, an effect of improving heat dissipation and/or an effect of reducing the thickness of the mesh pattern 60 that can exhibit desired heat dissipation performance can be obtained. In some embodiments, the width W1 of the elongated portion can be, for example, greater than 10 μm, greater than 20 μm, greater than 50 μm, greater than 100 μm, or greater than 150 μm. Meanwhile, from the viewpoint of the transparency and uniform heat dissipation of the PSA sheet 1, the width W1 of the elongated portion is usually appropriately about 5 mm or less, preferably about 3 mm or less, more preferably about 2 mm or less, and still more preferably about 1 mm or less. In some embodiments, the width W1 of the elongated portion may be, for example, 700 μm or less, 500 μm or less, 400 μm or less, 300 μm or less, 200 μm or less, 100 μm or less, 50 μm or less, 25 μm or less, or 15 μm or less. The width of the linear, curved, or polygonal elongated portion in other mesh patterns can also be preferably selected from the above-described examples of the width W1 of the elongated portion.

In the mesh pattern 60 shown in FIG. 2, the interval W2 between the elongated portions 75A constituting the first stripe-shaped pattern portion 70 is not particularly limited, and may be set so that the PSA sheet 1 can exhibit desired properties. In some embodiments, the interval W2 between the elongated portions here refers to the width of a gap

existing between two adjacent elongated portions in the metal mesh layer 12, as shown in FIG. 2. From the viewpoint of the transparency of the PSA sheet 1, the interval W2 between the elongated portions is usually suitably more than 0.3 mm and may be 0.5 mm or more, 1.0 mm or more, 1.5 mm or more, and 3.0 mm or more. Further, the interval W2 between the elongated portions can be, for example, about 30 mm or less, and from the viewpoints of heat dissipation performance and uniform heat dissipation, the interval is usually preferably about 20 mm or less, and may be 15 mm or less, 10 mm or less, and 5.0 mm or less. The interval W2 between the elongated portions 85A constituting the second stripe-shaped pattern portion 80 is also preferably set within the ranges exemplified as the interval W2 between the elongated portions 75A. In each of the elongated portions 75A constituting the first stripe-shaped pattern portion 70 and the elongated portions 85 constituting the second stripe-shaped pattern portion 80, it is preferable that the interval W2 be the same. The interval W2 between the elongated portions 75A constituting the first stripe-shaped pattern portion 70 and the interval W2 between the elongated portions 85 constituting the second stripe-shaped pattern portion 80 may be the same or different.

The shape of the island portion in the sea-island pattern, that is, the shape of the opening is not particularly limited and can be, for example, a circle, an ellipse, an egg shape, an oval, a semicircle, a sector having a central angle of less than 180 degrees or more than 180 degrees, a polygon such as a triangle, a quadrangle (square, rectangle, trapezoid, rhomb, etc.), a hexagon, shapes obtained by rounding the corners of any of these polygons, and the like. The area of each opening (that is, the opening area per one opening) is not particularly limited, and may be, for example, in a range of about 0.01 $mm^2$ or more and about 1000 $mm^2$ or less. From the viewpoint of the transparency of the PSA sheet, in some embodiments, the area of each opening may be, for example, 0.2 $mm^2$ or more, 1.0 $mm^2$ or more, 5.0 $mm^2$ or more, or 10 $mm^2$ or more. The area of each opening may be, for example, 400 $mm^2$ or less, 100 $mm^2$ or less, 50 $mm^2$ or less, or 25 $mm^2$ or less. As the area of the opening decreases, the heat dissipation performance and uniform heat dissipation tend to be improved. The area of each opening in the lattice pattern can also be preferably selected from the above-described examples of the area of the opening in the sea-island pattern.

The thickness of the metal mesh layer is not particularly limited, and can be set so as to realize a PSA sheet exhibiting desired properties. The thickness of the metal mesh layer may be, for example, 0.01 μm or more, 0.1 μm or more, or 0.5 μm or more. As the thickness of the metal mesh layer increases, the thermal conductivity of the metal mesh layer tends to increase. In some embodiments of the PSA sheet disclosed herein, from the viewpoint of easily obtaining sufficient thermal conductivity, the thickness of the metal mesh layer is preferably, for example, 1.0 μm or more, and may be 1.5 μm or more, and 1.8 μm or more. Further, the thickness of the metal mesh layer may be, for example, less than 30 μm, less than 20 μm, less than 15 μm, less than 10 μm, less than 8 μm, less than 5 μm, or less than 3 μm. The fact that the thickness of the metal mesh layer is not too large can be advantageous from the viewpoint of improving the smoothness of the PSA surface (that is, the surface of the PSA layer on the side to be adhered to the adherend). The high smoothness of the PSA surface can contribute to the improvement of heat dissipation by the PSA sheet through the improvement of the adhesion between the PSA sheet and the adherend (which can be a heat source). The thickness of the metal mesh layer can be determined by, for example, observing a cross-sectional SEM of the PSA sheet.

In the PSA sheet disclosed herein, the opening area ratio of the metal mesh layer is not particularly limited, and may be, for example, 30% or more. From the viewpoint of the transparency of the PSA sheet, the opening area ratio of the metal mesh layer is advantageously 50% or more, preferably 60% or more, and may be 70% or more. In an embodiment in which transparency is more important, the opening area ratio of the metal mesh layer may be more than 75%, more than 80%, or more than 85%. Further, from the viewpoint of the thermal conductivity of the metal mesh layer, the opening area ratio of the metal mesh layer is usually suitably 98% or less, 95% or less, or 90% or less. In an embodiment in which thermal conductivity is more important, the opening area ratio of the metal mesh layer may be less than 85%, less than 80%, less than 75%, or less than 70%.

A method for forming the metal mesh layer is not particularly limited, and a known method can be used. For example, the metal mesh layer can be preferably formed by a method including a vapor deposition method. Examples of such a method include a method of arranging a mask having a pattern reversed with respect to an intended mesh pattern on the first surface side of the substrate and vapor-depositing a metal; a method of vapor-depositing a metal on the entire first surface of the substrate, then arranging a mask having a pattern corresponding to the mesh pattern, and performing etching to form openings; and the like. A plating method (electrolytic plating method, electroless plating method, or the like) may be used instead of the vapor deposition method.

As another method for forming a mesh pattern, for example, a composition including a metal mesh layer constituting material is applied in a pattern, and if necessary, dried, cured, and baked to form a mesh pattern. As a method for applying the composition in a pattern, a known method such as printing such as screen printing or gravure printing, or dispenser coating can be used as appropriate. Further, the composition may be applied to the entire first surface of the substrate to form a metal film, and then openings may be formed in the metal film by etching or the like. Alternatively, a porous metal film is fabricated by forming openings in a metal foil produced by rolling, electrolysis, or the like by laser processing, punching (perforating), or the like, and disposing the porous metal film on the first surface of the substrate to obtain a metal mesh layer. The metal mesh layer is preferably bonded to the first surface of the

substrate, but this is not limiting, and for example, the PSA layer laminated on the substrate may be held between the substrate and the PSA layer by direct contact with the substrate at the openings of the metal mesh layer. In order to join the metal mesh layer to the first surface of the substrate, an adhesive or the like may be used as necessary.

PSA Layer

In the art disclosed herein, the PSA contained in the PSA layer is not particularly limited. The PSA is, for example, an adhesive including one or two or more various polymers such as an acrylic polymer, a rubber polymer, a polyester polymer, a urethane polymer, a polyether polymer, a silicone polymer, a polyamide polymer, and a fluorine polymer as a base polymer (that is, a component that accounts for 50% by weight or more of the polymer component). The PSA layer in the art disclosed herein may be formed from a PSA composition including such a base polymer. The form of the PSA composition is not particularly limited, and the PSA composition may be in various forms, for example, such as a water dispersion type, a solvent type, a hot melt type, and an active energy ray-curable type (for example, a photocurable type), and the like.

In some embodiments, an acrylic polymer can be preferably used as the base polymer from the viewpoint of the transparency and heat resistance. The acrylic polymer used in the art disclosed herein typically includes a monomer unit derived from an alkyl (meth)acrylate. An alkyl (meth)acrylate having a linear or branched alkyl group having 1 to 20 carbon atoms (that is, $C_{1-20}$) can be preferably used. The proportion of the (meth)acrylic acid $C_{1-20}$ alkyl ester in the total amount of the monomer components constituting the acrylic polymer may be, for example, 10% by weight or more, 15% by weight or more, 20% by weight or more, and 25% by weight or more. In some embodiments, the proportion of the (meth)acrylic acid $C_{1-20}$ alkyl ester may be 35% by weight or more, 50% by weight or more, 65% by weight or more, or 75% by weight or more because the properties can be easily balanced. From the viewpoint of the cohesiveness of the PSA layer, the proportion of the (meth)acrylic acid $C_{1-20}$ alkyl ester in the total amount of the monomer components may be, for example, 98% by weight or less, 90% by weight or less, or 80% by weight or less. From the viewpoint of expanding the room for property adjustment by monomers other than the (meth)acrylic acid $C_{1-20}$ alkyl ester (for example, one or two or more of high-refractive-index monomers, N-vinyl cyclic amides, hydroxyl group-containing monomers, and the like as described below), in some embodiments, the proportion of the (meth)acrylic acid $C_{1-20}$ alkyl ester may be 60% by weight or less, 45% by weight or less, or 35% by weight or less.

Non-limiting specific examples of the $C_{1-20}$ alkyl (meth)acrylate include methyl (meth)acrylate, ethyl (meth)acrylate, propyl (meth)acrylate, isopropyl (meth)acrylate, n-butyl (meth)acrylate, isobutyl (meth)acrylate, s-butyl (meth)acrylate, t-butyl (meth)acrylate, pentyl (meth)acrylate, isopentyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, stearyl (meth)acrylate, isostearyl (meth)acrylate, nonadecyl (meth)acrylate, and eicosyl (meth)acrylate.

Among these, it is preferable to use at least a $C_{1-18}$ alkyl (meth)acrylate and it is more preferable to use at least a $C_{1-14}$ alkyl (meth)acrylate. In some embodiments, the acrylic polymer may include, as a monomeric unit, at least one species selected among $C_{4-12}$ alkyl (meth)acrylates (preferably $C_{4-10}$ alkyl acrylates). For example, an acrylic polymer including at least one monomer unit selected from the group consisting of n-butyl acrylate (BA), 2-ethylhexyl acrylate (2EHA), and isononyl acrylate (iNA) is preferable. A polymer including at least one of BA and 2EHA (for example, including at least BA) is more preferable. Examples of other $C_{1-18}$ alkyl (meth)acrylates that can be preferably used include methyl acrylate, methyl methacrylate, n-butyl methacrylate, 2-ethylhexyl methacrylate, isostearyl acrylate, and the like.

In one embodiment of the art disclosed herein, the total amount of BA, 2EHA, and iNA in the total amount of the monomer components (the amount of one or two of BA, 2EHA, and iNA may be zero) is, for example, 10% by weight or more, preferably 15% by weight or more, more preferably 20% by weight or more, and for example, 25% by weight or more. By using a monomer having a low glass transition temperature (Tg) of the homopolymer as described above, the flexibility and contour conformability of the PSA layer can be improved. This can provide advantageous effects in terms of improving the heat dissipation of the PSA sheet, such as improving the filling property into the openings of the metal mesh layer and improving the adhesion to the adherend. In some embodiments, the total amount of BA, 2EHA, and iNA may be 35% by weight or more, 50% by weight or more, 65% by weight or more, or 75% by weight or more from the viewpoint of easy adjustment of adhesive properties. Further, from the viewpoint of expanding the room for property adjustment by monomers other than the (meth)acrylic acid $C_{1-20}$ alkyl ester (for example, one or two or more of high-refractive-index monomers, N-vinyl cyclic amides, hydroxyl group-containing monomers, and the like as described below), in some embodiments, the total amount of BA, 2EHA and iNA may be 60% by weight or less, 45% by weight or less, or 35% by weight or less.

The monomers forming the acrylic polymer may include another monomer (or copolymerizable monomer, hereinafter) that is not an alkyl (meth)acrylate and is capable of copolymerizing with the alkyl (meth)acrylate. As the

copolymerizable monomer, a monomer having a polar group (such as a carboxy group, a hydroxy group and an amide group) may be suitably used. The monomer having a polar group may be useful for introducing a crosslinking point into the acrylic polymer or increasing cohesive strength of the acrylic polymer. As the copolymerizable monomer, a high-refractive-index monomer as described below may be used. The high-refractive-index monomer can help control the refractive index of the PSA layer, and thus of the PSA sheet. As the copolymerizable monomer, one kind can be used alone, or two or more kinds can be used in combination.

When the copolymerizable monomer is used, the amount thereof used (when two or more kinds are used, the total amount thereof) is not particularly limited. Usually, the amount used is suitably 0.01% by weight or more of the total amount of the monomer components for preparing the acrylic polymer, and may be 0.1% by weight or more, or 1.0% by weight or more. From the viewpoint of better exhibiting the effect of the use of the copolymerizable monomer, in some embodiments, the amount of the copolymerizable monomer used may be 5% by weight or more, 10% by weight or more, 25% by weight or more, 40% by weight or more, 50% by weight or more, or 60% by weight or more of the total amount of the monomer components. The amount of the copolymerizable monomer used can be, for example, 90% by weight or less of the total amount of the monomer components. In some embodiments, the amount of the copolymerizable monomer used may be 85% by weight or less, 80% by weight or less, or 75% by weight or less because the properties can be easily balanced.

Non-limiting specific examples of the copolymerizable monomer include those indicated below.

Carboxyl group-containing monomers: for example, acrylic acid, methacrylic acid, carboxyethyl acrylate, carboxypentyl acrylate, itaconic acid, maleic acid, fumaric acid, crotonic acid and isocrotonic acid;
Acid anhydride group-containing monomers: for example, maleic anhydride and itaconic anhydride;
Hydroxy group-containing monomers: for example, hydroxyalkyl (meth)acrylates such as 2-hydroxyethyl (meth)acrylate, 2-hydroxypropyl (meth)acrylate, 2-hydroxybutyl (meth)acrylate, 3-hydroxypropyl (meth)acrylate, 4-hydroxybutyl (meth)acrylate, 6-hydroxyhexyl (meth)acrylate, 8-hydroxyoctyl (meth)acrylate, 10-hydroxydecyl (meth)acrylate, 12-hydroxylauryl (meth)acrylate and (4-hydroxymethylcyclohexyl)methyl (meth)acrylate;
Monomers having a sulphonate group or a phosphate group: for example, styrene sulphonic acid, allyl sulphonic acid, sodium vinylsulphonate, 2-(meth)acrylamide-2-methylpropane sulphonic acid, (meth)acrylamide propane sulphonic acid, sulphopropyl (meth)acrylate, (meth)acryloyloxy naphthalenesulphonic acid and 2-hydroxyethylacryloyl phosphate;
Epoxy group-containing monomers: for example, epoxy group-containing acrylates such as glycidyl (meth)acrylate and (meth)acrylate-2-ethyl glycidyl ether, allyl glycidyl ether and (meth)acrylate glycidyl ether;
Cyano group-containing monomers: for example, acrylonitrile and methacrylonitrile;
Isocyanato group-containing monomers: for example, 2-isocyanatoethyl (meth)acrylate;
Amido group-containing monomers: for example, (meth)acrylamide; N,N-dialkyl (meth)acrylamides such as N,N-dimethyl(meth)acrylamide, N,N-diethyl(meth)acrylamide, N,N-dipropyl(meth)acrylamide, N,N-diisopropyl(meth)acrylamide, N,N-di(n-butyl)(meth)acrylamide and N,N-di(t-butyl) (meth)acrylamide; N-alkyl (meth)acrylamides such as N-ethyl(meth)acrylamide, N-isopropyl(meth)acrylamide, N-butyl(meth)acrylamide and N-n-butyl(meth)acrylamide; N-vinylcarboxylic acid amides such as N-vinylacetamide; a monomer having a hydroxy group and an amide group, for example, an N-hydroxyalkyl(meth)acrylamide such as N-(2-hydroxyethyl)(meth)acrylamide, N-(2-hydroxypropyl)(meth)acrylamide, N-(1-hydroxypropyl)(meth)acrylamide, N-(3-hydroxypropyl)(meth)acrylamide, N-(2-hydroxybutyl)(meth)acrylamide, N-(3-hydroxybutyl)(meth)acrylamide, and N-(4-hydroxybutyl)(meth)acrylamide; a monomer having an alkoxy group and an amide group, for example, an N-alkoxyalkyl(meth)acrylamide such as N-methoxymethyl(meth)acrylamide, N-methoxyethyl(meth)acrylamide, and N-butoxymethyl(meth)acrylamide; and N,N-dimethylaminopropyl(meth)acrylamide, N-(meth)acryloylmorpholine, etc.
Monomers having a nitrogen atom-containing ring: for example, N-vinyl-2-pyrrolidone, N-methylvinylpyrrolidone, N-vinylpyridine, N-vinylpiperidone, N-vinylpyrimidine, N-vinylpiperazine, N-vinylpyrazine, N-vinylpyrrole, N-vinylimidazole, N-vinyloxazole, N-(meth)acryloyl-2-pyrrolidone, N-(meth)acryloylpiperidine, N-(meth)acryloylpyrrolidine, N-vinylmorpholine, N-vinyl-3-morpholinone, N-vinyl-2-caprolactam, N-vinyl-1,3-oxazin-2-one, N-vinyl-3,5-morpholinedione, N-vinylpyrazole, N-vinylisoxazole, N-vinylthiazole, N-vinylisothiazole and N-vinylpyridazine (such as lactams including N-vinyl-2-caprolactam);
Monomers having a succinimide skeleton: for example, N-(meth)acryloyloxy methylene succinimide, N-(meth)acryloyl-6-oxy hexamethylene succinimide and N-(meth)acryloyl-8-oxy hexamethylene succinimide;
Maleimides: for example, N-cyclohexylmaleimide, N-isopropylmaleimide, N-laurylmaleimide and N-phenylmaleimide;
Itaconimides: for example, N-methyl itaconimide, N-ethyl itaconimide, N-butyl itaconimide, N-octyl itaconimide, N-2-ethylhexyl itaconimide, N-cyclohexyl itaconimide and N-lauryl itaconimide;
Aminoalkyl (meth)acrylates: for example, aminoethyl (meth)acrylate, N,N-dimethylaminoethyl (meth)acrylate, N,N-diethylaminoethyl (meth)acrylate and t-butylaminoethyl (meth)acrylate;

Alkoxy group-containing monomers: for example, an alkoxyalkyl (meth)acrylate such as 2-methoxyethyl (meth)acrylate, 3-methoxypropyl (meth)acrylate, 2-ethoxyethyl (meth)acrylate, propoxyethyl (meth)acrylate, butoxyethyl (meth)acrylate and ethoxypropyl (meth)acrylate; and an alkoxy alkylene glycol (meth)acrylate such as methoxy ethylene glycol (meth)acrylate, methoxy propylene glycol (meth)acrylate, methoxy poly(ethylene glycol) (meth)acrylate and methoxy poly(propylene glycol) (meth)acrylate;

Vinyl esters: for example, vinyl acetate and vinyl propionate;

Vinyl ethers: for example, vinyl alkyl ethers such as methyl vinyl ether and ethyl vinyl ether;

Olefins: for example, ethylene, butadiene, isoprene and isobutylene;

(Meth)acrylic esters having an alicyclic hydrocarbon group: for example, cyclopentyl (meth)acrylate, cyclohexyl (meth)acrylate, isobornyl (meth)acrylate and dicyclopentanyl (meth)acrylate;

Vinyl compounds having an aromatic ring: for example, an aromatic ring-containing vinyl compound such as styrene, $\alpha$-methylstyrene, and vinyltoluene.

(Meth)acrylic esters having an aromatic ring: for example, aromatic ring-containing (meth)acrylates such as phenyl (meth)acrylate, phenoxyethyl (meth)acrylate and benzyl (meth)acrylate;

Heterocyclic ring-containing (meth)acrylates such as tetrahydrofurfuryl (meth)acrylate, halogen atom-containing monomers such as vinyl chloride and halogen atom-containing monomers (for example, fluorine atom-containing (meth)acrylates), silicon atom-containing (meth)acrylates such as silicone (meth)acrylate, (meth)acrylic esters obtained from terpene compound derivative alcohols, sulfur-containing monomers, and the like.

Copolymerizable monomers that can be preferably used in some embodiments include an N-vinyl cyclic amide represented by the following general formula (M1).

[Chem 1]

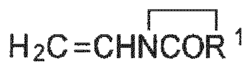

(M1)

Here, $R^1$ in the general formula (M1) is a divalent organic group.

Specific examples of the N-vinyl cyclic amide include N-vinyl-2-pyrrolidone (NVP), N-vinyl-2-piperidone, N-vinyl-3-morpholinone, N-vinyl-2-caprolactam, N-vinyl-1,3-oxazin-2-one, and N-vinyl-3,5-morpholinedione. N-vinyl-2-pyrrolidone and N-vinyl-2-caprolactam are particularly preferable. The N-vinyl cyclic amides can be used alone or in combination of two or more.

The amount of the N-vinyl cyclic amide is not particularly limited, but is usually suitably 0.01% by weight or more (preferably 0.1% by weight or more, for example, 0.5% by weight or more) of the total amount of monomer components for preparing an acrylic polymer. In some embodiments, the amount used may be, for example, 1% by weight or more, 3% by weight or more, or 5% by weight or more. Further, from the viewpoint of improving the tackiness at normal temperature (25°C) and the flexibility at a low temperature, the amount of the N-vinyl cyclic amide is usually suitably 40% by weight or less, and may be 30% by weight or less, 20% by weight or less, 14% by weight or less, or 9% by weight or less of the total amount of the above monomer components.

Examples of other copolymerizable monomers that can be preferably used include a hydroxyl group-containing monomer (a monomer having a hydroxyl group and another functional group, for example, a monomer having a hydroxyl group and an amide group). Specific examples of hydroxy group-containing monomers that can be favorably used include 2-hydroxyethyl (meth)acrylate, 4-hydroxybutyl (meth)acrylate, 6-hydroxyhexyl (meth)acrylate and N-(2-hydroxyethyl)(meth)acrylamide. Among others, preferable examples include 2-hydroxyethyl acrylate (HEA), 4-hydroxybutyl acrylate (4HBA), and N-(2-hydroxyethyl)acrylamide (HEAA). The hydroxyl group-containing monomers can be used alone or in combination of two or more.

The amount of the hydroxyl group-containing monomer used is not particularly limited, but is usually suitably 0.01% by weight or more (for example, 0.03% by weight or more) of the total amount of the monomer components for preparing the acrylic polymer. In some embodiments, the amount used may be, for example, 0.05% by weight or more, 0.1% by weight or more, 0.5% by weight or more, 1.0% by weight or more, or 1.2% by weight or more. Further, from the viewpoint of improving the tackiness at normal temperature (25°C) and the flexibility at a low temperature, the amount of the hydroxyl group-containing monomer used is usually suitably 20% by weight or less of the total amount of the above monomer components, and may be 10% by weight or less, 5.0% by weight or less, or 3.0% by weight or less.

In some embodiments, an N-vinyl cyclic amide and a hydroxyl group-containing monomer can be used in combination as the copolymerizable monomers. In this case, the total amount of the N-vinyl cyclic amide and the hydroxyl group-containing monomer may be, for example, 0.1% by weight or more of the total amount of the monomer components for preparing the acrylic polymer, and may be 1.0% by weight or more, 3.0% by weight or more, or 6.0% by weight or

more. Further, the total amount of the N-vinyl cyclic amide and the hydroxyl group-containing monomer may be, for example, 50% by weight or less, preferably 30% by weight or less, or 20% by weight or less, 15% by weight or less, or 10% by weight or less of the total amount of the monomer components.

In some embodiments, the proportion of the acidic group-containing monomer in the monomer components for preparing the acrylic polymer may be, for example, 2% by weight or less, 1% by weight or less, or 0.5% by weight or less (for example, less than 0.1% by weight). A typical example of the acidic group-containing monomer is a carboxy group-containing monomer, and other examples include a sulfonic acid group-containing monomer and a phosphoric acid group-containing monomer. The PSA layer including the acrylic polymer in which the amount of the acidic group-containing monomer used is limited as described above is preferable from the viewpoint of preventing metal corrosion. It is possible to use substantially no acidic group-containing monomer as the monomer component. Here, "using substantially no acidic group-containing monomer" means not using an acidic group-containing monomer at least intentionally.

In some embodiments, a high-refractive-index monomer may be preferably used as at least a part of the copolymerizable monomer. Here, in the present specification, the "high-refractive-index monomer" refers to a monomer such that the refractive index of the homopolymer thereof is about 1.50 or more. The refractive index can be measured using a commercially available Abbe refractometer (for example, model "DR-M2", manufactured by ATAGO Co., Ltd.). The high-refractive-index monomers can be used alone or in combination of two or more.

The high-refractive-index monomer can be, for example, a monomer corresponding to at least one of an aromatic ring-containing monomer such as an aromatic ring-containing (meth)acrylate or an aromatic ring-containing vinyl compound, a sulfur-containing monomer, and a halogenated (meth)acrylate.

Non-limiting examples of aromatic ring-containing (meth)acrylates include benzyl (meth)acrylate, naphthyl (meth)acrylate, phenoxyethyl (meth)acrylate, phenoxybutyl (meth)acrylate, phenylphenol (meth)acrylate, fluorene-based (meth)acrylates, and ethoxylated products thereof (for example, ethoxylated phenylphenol acrylate). Here, "ethoxylation" means that an oxyethylene chain is interposed between the aromatic ring of the corresponding aromatic ring-containing (meth)acrylate and the (meth)acryloyl group. The number of repeating oxyethylene units in the oxyethylene chain is typically 1 to 4, preferably 1 to 3, and more preferably 1 to 2, for example 1.

The fluorene-based (meth)acrylate is a compound (monomer) having a fluorene skeleton and a (meth)acryloyl group in a molecule, and preferably has a structure in which the (meth)acryloyl group is bonded directly or through an oxyalkylene chain (monooxyalkylene chain or polyoxyalkylene chain) to the fluorene skeleton. Specific examples of the fluorene-based (meth)acrylate include 9,9-bis(4-hydroxyphenyl)fluorene (meth)acrylate, 9,9-bis[4-(2-hydroxyethoxy)phenyl]fluorene (meth)acrylate, and the like.

When an aromatic ring-containing (meth)acrylate is used, phenylphenol (meth)acrylate, ethoxylated phenylphenol (meth)acrylate and benzyl (meth)acrylate are preferred among the above examples, and ethoxylated phenylphenol acrylate and benzyl acrylate are more preferred.

Examples of the aromatic ring-containing vinyl compound include styrene, $\alpha$-methylstyrene and vinyltoluene. Of these, styrene is preferred.

Examples of the sulfur-containing monomer include sulfur-containing (meth)acrylates such as 1,2-bis(meth)acryloylthioethane, 1,3-bis(meth)acryloylthiopropane, 1,4-bis(meth)acryloylthiobutane, 1,2-bis(meth)acryloylmethylthiobenzene, and 1,3-bis (meth)acryloylmethylthiobenzene, and the like.

Examples of halogenated (meth)acrylates include 6-(4,6-dibromo-2-isopropylphenoxy)-1-hexyl acrylate, 6-(4,6-dibromo-2-s-butylphenoxy)-1-hexyl acrylate, 2,6-dibromo-4-nonylphenyl acrylate, 2,6-dibromo-4-dodecylphenyl acrylate, and the like.

From the viewpoint of facilitating the adjustment of the refractive index of the PSA layer by using the high-refractive-index monomer, the proportion of the high-refractive-index monomer (when two or more are used, the total proportion thereof) in the total amount of the monomer components can be, for example, 10% by weight or more, and may be 25% by weight or more. From the viewpoint of better exhibiting the effect of using the high-refractive-index monomer, in some embodiments, the proportion of the high-refractive-index monomer may be 40% by weight or more, 50% by weight or more, or 60% by weight or more. The proportion of the high-refractive-index monomer in the total amount of the monomer components can be, for example, 85% by weight or less. In some embodiments, the proportion of the high-refractive-index monomer may be 80% by weight or less, 75% by weight or less, 70% by weight or less, or 65% by weight or less because properties can be easily balanced.

The method for obtaining the base polymer is not particularly limited. Known polymerization methods may be appropriately employed such as solution polymerization, emulsion polymerization, bulk polymerization, suspension polymerization and photopolymerization. In some embodiments, solution polymerization or photopolymerization may be preferably employed.

The initiator used for polymerization may be appropriately selected according to the polymerization method from heretofore known thermal polymerization initiators, photopolymerization initiators and the like. For the polymerization initiator, solely one species or a combination of two or more species can be used.

Examples of the thermal polymerization initiator include azo polymerization initiators, persulfates, peroxide polymerization initiators and redox polymerization initiators. The amount of thermal polymerization initiator used is not particularly limited, and may be, for example, in the range of 0.01 part by weight to 5 parts by weight and preferably 0.05 part by weight to 3 parts by weight relative to 100 parts by weight of monomers used for preparing the acrylic polymer.

The photopolymerization initiator is not particularly limited and examples thereof that may be used include benzoin ether photopolymerization initiators, acetophenone photopolymerization initiators, $\alpha$-ketol photopolymerization initiators, aromatic sulphonyl chloride photopolymerization initiators, photoactive oxime photopolymerization initiators, benzoin photopolymerization initiators, benzyl photopolymerization initiators, benzophenone photopolymerization initiators, ketal photopolymerization initiators, thioxanthone photopolymerization initiators, acylphosphine oxide photopolymerization initiators and the like. The amount of photopolymerization initiator used is not particularly limited, and may be, for example, in the range of 0.01 part by weight to 5 parts by weight and preferably 0.03 part by weight to 3 parts by weight relative to 100 parts by weight of monomers used for preparing the base polymer.

In some embodiments, the PSA composition for forming PSA layer may include the acrylic polymer as a partial polymer (acrylic polymer syrup) obtainable by subjecting a mixture of monomers with a polymerization initiator to UV irradiation to polymerize part of the monomers. The PSA composition containing such acrylic polymer syrup is applied to a certain substrate and irradiated with UV to complete the polymerization. In other words, the acrylic polymer syrup can be thought as a precursor of the acrylic polymer. The PSA layer of the PSA sheet disclosed herein can be formed, using, for instance, a PSA composition that includes the acrylic polymer as the base polymer in the acrylic polymer syrup form and includes, as necessary, a suitable amount of a polyfunctional monomer described later.

Although not particularly limited, the weight average molecular weight (Mw) of the base polymer can be, for example, about $5 \times 10^4$ or more. With the base polymer having such an Mw, a PSA exhibiting good cohesiveness is easily obtained. In some embodiments, the Mw of the base polymer can be, for example, $10 \times 10^4$ or more, $20 \times 10^4$ or more, or $30 \times 10^4$ or more. Further, the Mw of the base polymer is usually suitably about $500 \times 10^4$ or less. The base polymer having such an Mw is suitable for forming a PSA layer having good adhesion to an adherend and a metal mesh layer.

The Mw of the base polymer can be determined as a value in terms of polystyrene by gel permeation chromatography (GPC). The GPC measurement can be performed, for example, using a GPC device manufactured by Tosoh Corporation, HLC-8220GPC, under the following conditions.

GPC Measurement

- Sample concentration: 0.2% by weight (tetrahydrofuran (THF) solution)
- Sample injection volume: 10 $\mu$l
- Eluent: THF, flow rate: 0.6 ml/min
- Measurement temperature: 40°C
- Column:

  Sample column: one TSKGUARDCOLUMN SUPERHZ-H + two TSKGEL SUPERHZM-Hs
  Reference column: one TSKGEL SUPERH-RC

- Detector: differential refractometer (RI)

In the art disclosed herein, the glass transition temperature (Tg) of the base polymer constituting the PSA layer is not particularly limited, and can be set so as to obtain the desired properties. The Tg of the base polymer is usually suitably 10°C or lower, preferably 5°C or lower, more preferably 3°C or lower, and may be lower than 0°C, lower than -3°C, or lower than -5°C. When the Tg of the base polymer is lowered, the adhesion between the adherend and the PSA layer and the adhesion between the metal mesh layer and the PSA layer tend to be improved. The improvement of the adhesion may be advantageous from the viewpoint of efficiently transferring heat from the adherend to the metal mesh layer through the PSA layer and improving the heat dissipation of the PSA sheet. In some embodiments, from the viewpoint of easily obtaining higher adhesive performance (adhesive strength and the like), the Tg of the base polymer may be lower than -10°C, lower than -20°C, or lower than -30°C.

The lower limit of the Tg of the base polymer is not particularly limited. From the viewpoint of the cohesiveness of the PSA layer, the Tg of the base polymer is usually suitably -70°C or higher, preferably -60°C or higher, and may be -50°C or higher, and -40°C or higher. In some embodiments, from the viewpoint of facilitating the formation of a high-refractive-index PSA layer, the Tg of the base polymer may be -25°C or higher, -15°C or higher, -10°C or higher, or 5°C or higher.

Here, the Tg of the base polymer refers to the Tg determined by the Fox equation based on the composition of the monomer components used for preparing the base polymer. As shown hereinbelow, the Fox equation is a relational expression between the Tg of the copolymer and the glass transition temperatures Tgi of homopolymers obtained by homopolymerizing each of the monomers constituting the copolymer.

$$1/Tg = \Sigma(Wi/Tgi)$$

In the above Fox formula, Tg represents the glass transition temperature of the copolymer (unit: K), Wi represents the weight fraction of the monomer i in the copolymer (copolymerization ratio based on weight), and Tgi represents the glass transition temperature of the homopolymer of the monomer i (unit: K). When the base polymer is a homopolymer, the Tg of the homopolymer matches the Tg of the base polymer.

As the glass transition temperature of the homopolymer used for calculating Tg, a value described in a publicly known document is used. Specifically, numerical values are listed in "Polymer Handbook" (3rd edition, John Wiley & Sons, Inc., 1989). For a monomer for which a plurality of values is described in the Polymer Handbook, the highest value is used. As a glass transition temperature of a homopolymer of a monomer not described in the Polymer Handbook, a value obtained by a measurement method described in Japanese Patent Application Publication No. 2007-51271 can be used.

Crosslinking Agent

In the PSA layer, for purposes such as adjusting the cohesive strength, a crosslinking agent may be used as necessary. As the crosslinking agent, a crosslinking agent known in the field of PSA can be used, with examples including epoxy-based crosslinking agents, isocyanate-based crosslinking agent, silicone-based crosslinking agent, oxazoline-based crosslinking agent, aziridine-based crosslinking agent, silane-based crosslinking agent, alkyl-etherified melamine-based crosslinking agent and metal chelate-based crosslinking agents. In particular, isocyanate-based crosslinking agents, epoxy-based crosslinking agents and metal chelate-based crosslinking agents can be favorably used. For the crosslinking agent, solely one species or a combination of two or more species can be used.

When using a crosslinking agent, its amount used is not particularly limited. For instance, its amount can be greater than 0 part by weight relative to 100 parts by weight of base polymer. The amount of crosslinking agent used in relation to 100 parts by weight of base polymer can be, for instance, 0.01 part by weight or greater, or preferably 0.05 part by weight or greater. With increasing amount of crosslinking agent used, greater cohesive strength tends to be obtained. In some embodiments, the amount of crosslinking agent used in relation to 100 parts by weight of base polymer can be 0.1 part by weight or greater, 0.5 part by weight or greater, or even 1 part by weight or greater. On the other hand, from the standpoint of avoiding degradation of adhesiveness caused by an excessive increase in cohesive strength, the amount of crosslinking agent used in relation to 100 parts by weight of base polymer is usually suitably 15 parts by weight or less, 10 parts by weight or less, or even 5 parts by weight or less. The art disclosed herein can also be favorably implemented in an embodiment using no crosslinking agent.

To allow an aforementioned crosslinking reaction to proceed effectively, a crosslinking catalyst may be used. As the crosslinking catalyst, for instance, a tin-based catalyst (especially, dioctyltin dilaurate) can be preferably used. The amount of crosslinking catalyst used is not particularly limited. For instance, it can be about 0.0001 part to 1 part by weight to 100 parts by weight of base polymer.

Polyfunctional Monomer

In the PSA layer, a polyfunctional monomer may be used as necessary. The polyfunctional monomer used in place of or in combination with a crosslinking agent as described above may be helpful for purposes such as adjusting the cohesive strength. For instance, in the PSA layer formed from a photo-curable PSA composition, a polyfunctional monomer can be preferably used.

Examples of the polyfunctional monomer include ethylene glycol di(meth)acrylate, propylene glycol di(meth)acrylate, polyethylene glycol di(meth)acrylate, polypropylene glycol di(meth)acrylate, neopentyl glycol di(meth)acrylate, pentaerythritol di(meth)acrylate, pentaerythritol tri(meth)acrylate, dipentaerythritol hexa(meth)acrylate, ethyleneglycol di(meth)acrylate, 1,6-hexanediol di(meth)acrylate, 1,12-dodecanediol di(meth)acrylate, trimethylolpropane tri(meth)acrylate, tetramethylolmethane tri(meth)acrylate, allyl (meth)acrylate, vinyl (meth)acrylate, divinylbenzene, bisphenol A di(meth)acrylate, epoxy acrylate, polyester acrylate, urethane acrylate, butyldiol (meth)acrylate and hexyldiol di(meth)acrylate. Other examples include polyfunctional monomers including a fluorene skeleton, such as 9,9-bis(4-hydroxyphenyl) fluorene (meth)acrylate, 9,9-bis[4-(2-hydroxyethoxy)phenyl] fluorene (meth)acrylate, and the like. Examples of commercial products of such polyfunctional monomers include product names "OGSOL EA-0200", "OGSOL EA-0300", "OGSOL EA-0500", and "OGSOL EA-1000" manufactured by Osaka Gas Chemicals Co., Ltd. As the polyfunctional monomer, for example, dipentaerythritol hexa(meth)acrylate, 1,6-hexanediol di(meth)acrylate, trimethylolpropane tri(meth)acrylate and the like can be preferably used. Among them, preferred examples include trimethylolpropane tri(meth)acrylate, 1,6-hexanediol di(meth)acrylate, and dipentaerythritol hexa(meth)acrylate. For the polyfunctional monomer, solely one species or a combination of two or more species can be used.

The amount of polyfunctional monomer used depends on its molecular weight, the number of functional groups therein, etc.; it is usually suitably in a range of about 0.005 part to 3 parts by weight to 100 parts by weight of base polymer. In some embodiments, the amount of polyfunctional monomer used in relation to 100 parts by weight of base polymer can be, for instance, 0.01 part by weight or greater, or even 0.03 part by weight or greater. With increasing amount of polyfunctional monomer used, a higher cohesive strength tends to be obtained. Meanwhile, from the viewpoint of avoiding a decrease in adhesion to the adherend and/or the metal mesh layer due to excessive increase in cohesive strength, the amount of the polyfunctional monomer to be used based on 100 parts by weight of the base polymer is usually suitably 2.0 parts by weight or less, and may be 1.0 part by weight or less, 0.5 part by weight or less, 0.2 part by weight or less, or 0.1 part by weight or less.

Tackifier Resin

The PSA layer may include a tackifier resin as necessary. The tackifier resin is not particularly limited, and may be selected from among a rosin-based tackifier resin, a terpene-based tackifier resin, a phenol-based tackifier resin, a hydrocarbon-based tackifier resin, a ketone-based tackifier resin, a polyamide-based tackifier resin, an epoxy-based tackifier resin, and an elastomer-based tackifier resin. For the tackifier resin, solely one species or a combination of two or more species can be used. As the tackifier resin, a resin having a softening point (softening temperature) of about 80°C or more can be used. From the viewpoint of heat resistance, a tackifier resin having a softening point (softening temperature) of about 120°C or more (more preferably 130°C or more, for example, 140°C or more) is preferable. The maximum softening point is not particularly limited; it can be, for instance, about 200°C or lower (typically 180°C or lower). The softening point of a tackifier resin can be determined based on the softening point test method (ring and ball method) specified in JIS K 2207. When using a tackifier resin, its amount included is not particularly limited and can be selected so that suitable properties are obtained in accordance with the purpose and application. The tackifier resin content (when two or more species are included, their combined amount) to 100 parts by weight of base polymer can be, for instance, 5 parts by weight or greater, or even 10 parts by weight or greater. From the viewpoints of the adhesiveness and the high-temperature characteristics of the PSA layer, the amount of the tackifier resin based on 100 parts by weight of the base polymer is usually suitably 30 parts by weight or less, and may be 20 parts by weight or less, or 10 parts by weight or less. Alternatively, the tackifier resin may not be used.

Thermally Conductive Filler

In a preferred embodiment, a thermally conductive filler can be contained in the PSA layer. By including a thermally conductive filler in the PSA layer, heat transfer in the PSA layer can be improved. Thus, heat from the adherend can be more efficiently transmitted through the PSA layer to the metal mesh layer disposed between the substrate and the PSA layer.

The material forming the thermally conductive filler may be any material having a higher thermal conductivity than the base polymer and is not particularly limited. For, example, thermally conductive fillers mainly constituted of metals such as copper, silver, gold, aluminum, zinc, nickel, platinum, chromium, iron, and stainless steel; metal oxides such as aluminum oxide, silicon oxides (typically silicon dioxide), titanium oxide, zirconium oxide, zinc oxide, tin oxide, antimonic acid-doped tin oxide, copper oxide, and nickel oxide; hydrated metal compounds such as aluminum hydroxide [$Al_2O_3 \cdot 3H_2O$ or $Al(OH)_3$], boehmite [$Al_2O_3 \cdot H_2O$ or AlOOH], magnesium hydroxide [$MgO \cdot H_2O$ or $Mg(OH)_2$], calcium hydroxide [$CaO \cdot H_2O$ or $Ca(OH)_2$], zinc hydroxide [$Zn(OH)_2$], silica [$H_4SiO_4$ or $H_2SiO_3$ or $H_2Si_2O_5$], iron hydroxide [$Fe_2O_3 \cdot H_2O$ or 2FeO(OH)], copper hydroxide [$Cu(OH)_2$], barium hydroxide [$BaO \cdot H_2O$ or $BaO \cdot 9H_2O$], hydrated zirconium oxide [$ZrO \cdot nH_2O$], hydrated tin oxide [$SnO \cdot H_2O$], basic magnesium carbonate [$3MgCO_3 \cdot Mg(OH)_2 \cdot 3H_2O$], hydrotalcite [$6MgO \cdot Al_2O_3 \cdot H_2O$]dawsonite [$Na_2CO_3 \cdot Al_2O_3 \cdot nH_2O$], borax [$Na_2O \cdot B_2O_5 \cdot 5H_2O$] and zinc borate [$2ZnO \cdot 3B_2O_5 \cdot 3.5H_2O$]; carbides such as silicon carbide, boron carbide, nitrogen carbide, and calcium carbide; nitrides such as aluminum nitride, silicon nitride, boron nitride, and gallium nitride; carbonates such as calcium carbonate; titanates including barium titanate and potassium titanate; carbon-based substances including carbon black, carbon tubes (typically carbon nanotubes), carbon fibers, and diamond; and glass may preferably be used.

The shape of the filler is not particularly limited, and may be, for example, particulate or fibrous, and it is preferable that a particulate filter be used since the smoothness of the surface of the PSA layer is unlikely to be impaired even if the amount of the filler in the PSA layer is relatively large. The shape of the particles is not particularly limited,

and may be, for example, a bulk shape, a needle shape, a plate shape, a layer shape, or the like. The bulk shape includes, for example, a spherical shape, a rectangular parallelepiped shape, a crushed shape, or an irregular shape thereof. Preferable examples of the thermally conductive filler include a particulate filler composed of a hydrated metal compound, a metal oxide, a metal, or the like.

In some embodiments, a particulate filler formed from a hydrated metal compound can be preferably used. The hydrated metal compounds generally start to decompose at temperatures between 150°C and 500°C; they are compounds represented by the general formula $M_xO_y \cdot {}_nH_2O$ (M is a metal atom, x and y are integers of 1 or greater determined by the valence of the metal, and n is the number of waters of hydration) or double salts containing these compounds. Favorable examples of the hydrated metal compound include aluminum hydroxide and magnesium hydroxide. Generally, the hardness of hydrated metal oxides is relatively low, and thus, using a hydrated metal compound as a thermally conductive filler may be advantageous from the viewpoint of preventing damage to a metal mesh layer caused by contact with the filler. This is particularly significant, for example, in a PSA sheet that is supposed to undergo deformation such as bending or local application of pressure.

Hydrated metal compounds are commercially available. Examples of commercially available aluminum hydroxides include product names HIGILITE H-100-ME (mean primary particle diameter: 75 μm), HIGILITE H-10 (mean primary particle diameter: 55 μm), HIGILITE H-32 (mean primary particle diameter: 8 μm), HIGILITE H-31 (mean primary particle diameter: 20 μm) and HIGILITE H-42 (mean primary particle diameter: 1 μm) (all available from Showa Denko K.K.); and product name B103ST (mean primary particle diameter: 7 μm) (available from Nippon Light Metal Co., Ltd.). Examples of commercially available magnesium hydroxide include product name KISUMA 5A (mean primary particle diameter: 1 μm) (available from Kyowa Chemical Industry Co., Ltd.), product name Magnesium Hydroxide #300 (average particle size: 6 μm, available from Konoshima Chemical Co., Ltd.).

Examples of commercially available thermally conductive fillers other than hydrated metal compounds include boron nitride under product names HP-40 (available from Mizushima Ferroalloy Co., Ltd.) and PT620 (available from Momentive Performance Materials Inc.); aluminum oxide under product names AS-50 and AS-10 (available from Showa Denko K.K.); antimonic acid-doped tin under product names SN-100S, SN-100P and SN-100D (an aqueous dispersion) (all available from Ishihara Sangyo Kaisha, Ltd.); titanium oxide products under the TTO series (available from Ishihara Sangyo Kaisha, Ltd.); and zinc oxide under product names ZnO-310, ZnO-350 and ZnO-410 (available from Sumitomo Osaka Cement Co., Ltd.).

In the embodiment in which the PSA layer includes a thermally conductive filler, the amount of the thermally conductive filler in the PSA layer is not particularly limited, and can be set so as to obtain a desired effect. The amount of the thermally conductive filler may be, for example, 2% by weight or more, 5% by weight or more, 15% by weight or more, 25% by weight or more, 35% by weight or more, or 45% by weight or more as a weight proportion of the thermally conductive filler in the weight of the entire PSA layer. Increasing the amount of the thermally conductive filler tends to improve the thermal conductivity of the PSA layer. By improving the thermal conductivity of the PSA layer, heat from the adherend can be more efficiently transmitted to the metal mesh layer through the PSA layer. The amount of the thermally conductive filler in the PSA layer may be, for example, less than 90% by weight, suitably 80% by weight or less, and preferably 70% by weight or less of the entire PSA layer. The transparency (light transmittance) of the PSA layer tends to be improved when the amount of the thermally conductive filler is decreased. From the viewpoint of improving the adhesion between the PSA layer and the adherend or the metal mesh layer, it is preferable that the amount of the thermally conductive filler be not too large. In some embodiments, the amount of the thermally conductive filler in the PSA layer may be 65% by weight or less, 60% by weight or less, or 55% by weight or less. Even in an embodiment of the PSA sheet disclosed herein in which the metal mesh layer is disposed between the substrate and the PSA layer, so that the thermally conductive filler amount is the PSA layer is relatively low, or an embodiment in which the PSA layer is substantially free of a thermally conductive filler (for example, an embodiment in which the thermally conductive filler amount of the PSA layer is less than 1% by weight), good heat dissipation can be exhibited.

The mean particle diameter of the thermally conductive filler is not particularly limited. The mean particle diameter is usually suitably 100 μm or less, preferably 50 μm or less, or possibly even 25 μm or less. With decreasing mean particle diameter, the surface of the PSA layer tends to be smoother, leading to tighter adhesion to an adherend or a metal mesh layer. In some embodiments, the thermally conductive filler may have a mean particle diameter of 20 μm or less, 15 μm or less, 10 μm or less, 7 μm or less, 5 μm or less, 3 μm or less, 1 μm or less, or even less than 1 μm. The filler's mean particle diameter can be, for instance, 0.1 μm or greater, 0.5 μm or greater, or even 1.0 μm or greater. It can be advantageous to have not too small a mean particle diameter from the standpoint of the ease of handling and dispersing the thermally conductive filler.

In some embodiments, relative to the thickness Ta of the PSA layer, the thermally conductive filler's mean particle diameter is preferably less than 0.5Ta. Here, in this description, unless otherwise informed, the thermally conductive filler's mean particle diameter refers to the 50th-percentile particle diameter (median diameter) corresponding to 50% cumulative weight in a given size distribution obtained by a screening analysis. When the thermally conductive filler's mean particle diameter is less than 50% of the PSA layer's thickness Ta, it can be said that 50% by weight or

more of the thermally conductive filler in the PSA layer have particle diameters smaller than the PSA layer's thickness Ta. When 50% by weight or more of the thermally conductive filler in the PSA layer have particle diameters smaller than the PSA layer's thickness Ta, there is a higher tendency for the adhesive face to maintain good surface conditions (e.g. smoothness). This is preferable from the standpoint of obtaining tighter adhesion to the adherend to increase the thermal conductivity. From this point of view, in some embodiments, the average particle size of the thermally conductive filler may be less than 0.3 Ta, less than 0.2 Ta, or less than 0.15 Ta.

When the PSA layer disclosed herein includes a thermally conductive filler, the thermal conductivity of the PSA layer is not particularly limited, but is preferably 0.15 W/m·K or more. When the thermal conductivity of the PSA layer increases, the heat transfer from the PSA surface to the metal mesh layer improves, and the heat dissipation of the PSA sheet tends to improve. The thermal conductivity is preferably 0.2 W/m·K or greater, more preferably 0.25 W/m·K or greater, or yet more preferably 0.28 W/m·K or greater; for instance, it can be 0.3 W/m·K or greater, 0.31 W/m·K or greater, or even 0.32 W/m·K or greater. The maximum thermal conductivity of the PSA layer is not particularly limited. In some embodiments, in view of the balance with other properties such as transparency or adhesiveness, the thermal conductivity of the PSA layer can be, for instance, 2.0 W/m·K or less, 1.5 W/m·K or less, 1.0 W/m-K or less, 0.8 W/m·K or less, 0.5 W/m·K or less, or even less than 0.5 W/m·K. In some embodiments, the thermal conductivity of the PSA layer can be 0.45 W/m·K or less, 0.40 W/m·K or less, or even 0.35 W/m·K or less. As used herein, the thermal conductivity of the PSA layer refers to the value determined by a stationary heat flow method. For example, the thermal conductivity of the PSA layer can be measured by the method described in Japanese Patent Application Publication No. 2015-205986.

The refractive index of the thermally conductive filler is not particularly limited. In some embodiments, the refractive index of the thermally conductive filler is preferably 1.70 or less, more preferably 1.65 or less, and still more preferably 1.60 or less. Although the lower limit of the refractive index of the thermally conductive filler is not particularly limited, it is usually suitably 1.45 or more, preferably 1.50 or more, and more preferably 1.55 or more.

The refractive index can be measured using a commercially available Abbe refractometer (for example, model "DR-M2", manufactured by ATAGO Co.). The refractive index of the PSA layer described hereinbelow can be measured in the same manner. More specifically, the refractive index of the thermally conductive filler or the PSA layer can be measured by the method described in Examples described hereinbelow.

Dispersing Agent

When a thermally conductive filler is used, a dispersing agent can be used, as necessary, to improve the dispersibility of the filler in the PSA layer or the PSA composition for forming the PSA layer. The good dispersion of the thermally conductive filler in the PSA layer is preferable from the viewpoint of improving the adhesion of the PSA layer to the adherend and the metal mesh layer, and improving the heat transfer from the adherend to the metal mesh layer.

As the dispersing agent, a known surfactant can be used. The surfactant encompasses nonionic, anionic, cationic and amphoteric surfactants. For the dispersing agent, solely one species or a combination of two or more species can be used.

One example of preferable dispersing agent is a phosphoric acid ester. For instance, a monoester, diester, triester of phosphoric acid, a mixture of these and the like can be used. Specific examples of the phosphoric acid ester include phosphoric acid monoesters of polyoxyethylene alkyl ether, polyoxyethylene alkyl aryl ether or polyoxyethylene aryl ether, the corresponding phosphoric acid diesters, the corresponding phosphoric acid triesters, and derivatives of these. Favorable examples include phosphoric acid monoesters of polyoxyethylene alkyl ether or polyoxyethylene alkyl aryl ether, and phosphoric acid diesters of polyoxyethylene alkyl ether or polyoxyethylene alkyl aryl ether. The number of carbon atoms of the alkyl group in such a phosphoric acid ester is, for instance, 6 to 20, preferably 8 to 20, or more preferably 10 to 18, typically 12 to 16.

As the phosphoric acid ester, a commercially available product can be used. Examples include trade names PLYSURF A212E, PLYSURF A210G, PLYSURF A212C and PLYSURF A215C available from DKS Co., Ltd., and trade names PHOSPHANOL RE610, PHOSPHANOL RS710 and PHOSPHANOL RS610 available from TOHO Chemical Industry Co., Ltd.

The amount of dispersing agent used in relation to 100 parts by weight of the thermally conductive filler can be, for instance, 0.01 part to 25 parts by weight; it is usually suitably 0.1 part to 25 parts by weight. From the viewpoint of suitably exhibiting the effect of using the dispersing agent, the amount of the dispersing agent to be used in relation to 100 parts by weight of the thermally conductive filler is preferably 0.15 part by weight or more, more preferably 0.3 part by weight or more, still more preferably 0.5 part by weight or more, and may be 1 part by weight or more. From the standpoint of avoiding degradation of properties such as the adhesive properties caused by excessive use of the dispersing agent, the amount of the dispersing agent used in relation to 100 parts by weight of the thermally conductive filler is preferably 20 parts by weight or less, more preferably 15 parts by weight or less, may be 12 parts by weight or less, may be 10 parts by weight or less, or may be 5 parts by weight or less.

Besides the above, as far as the effect of this invention is not significantly impaired, the PSA layer in the art

disclosed herein may include, as necessary, known additives that can be used in PSA, such as leveling agent, plasticizer, softener, colorant (dye, pigment, etc.), antistatic agent, anti-aging agent, UV absorber, antioxidant, photo stabilizer, preservative, and corrosion inhibitor.

Formation of PSA Layer

The PSA layer in the PSA sheet disclosed herein may be a cured layer of the PSA composition. In other words, it can be formed by providing (e.g. applying) the PSA composition to a suitable surface and then subjecting it to a suitable curing process. When two or more different curing processes (drying, crosslinking, polymerization, etc.) are carried out, these can be done at the same time or in stages. When a partial polymer (e.g. acrylic polymer syrup) of monomers are used for the PSA composition, a final copolymerization reaction is typically carried out as the curing process. That is, the partial polymer is subjected to a further copolymerization reaction to form a fully polymerized product. For instance, with respect to a photocurable PSA composition, photoirradiation is carried out. As necessary, curing processes such as crosslinking and drying can be performed. For instance, with respect to a photocurable PSA composition that needs to be dried, photocuring should be carried out after drying. With respect to a PSA composition using a fully polymerized product, processes such as drying (drying with heat) and crosslinking are typically carried out as necessary as the curing process.

The PSA composition can be applied with, for example, a conventional coater such as a gravure roll coater, a reverse roll coater, a kiss-roll coater, a dip roll coater, a bar coater, a knife coater and a spray coater.

In some embodiments, the PSA layer can be formed from a solvent-free PSA composition. Here, the term "solvent-free" indicates that the solvent content of the PSA composition is 5% by weight or less, typically 1% by weight or less. The solvent refers to a component that is not included in the final PSA layer. Thus, for instance, unreacted monomers and the like possibly present in acrylic polymer syrup are excluded from the concept of solvent. As the solvent-free PSA composition, for instance, a photo curable or hot-melt PSA composition can be used. In particular, a PSA layer formed from a photo curable (e.g. UV curable) PSA composition is preferable. Formation of the PSA layer using a photo curable PSA composition is often carried out in an embodiment where the PSA composition is placed between two sheets and subjected to photo irradiation for curing in a state where the air is blocked.

The thickness of the PSA layer is not particularly limited and can be selected according to the purpose of use and the manner of use. From the viewpoint of improving light transmittance and heat transfer from the adherend to the metal mesh layer through the PSA layer, the thickness of the PSA layer is usually suitably 600 μm or less, preferably 300 μm or less, and more preferably 150 μm or less. In some embodiments, the thickness of the PSA layer may be less than 100 μm, 80 μm or less, 70 μm or less, 60 μm or less, or 55 μm or less. Further, the thickness of the PSA layer is usually suitably set to 1 μm or more (preferably 3 μm or more, for example, 5 μm or more) and so as to be larger than the thickness of the metal mesh layer. In some embodiments, from the viewpoint of improving the smoothness of the PSA surface and the contour-conformability (which can also be grasped as a contour-absorbing ability) of the PSA layer, the thickness of the PSA layer may be, for example, 10 μm or more, 15 μm or more, 20 μm or more, 30 μm or more, or 40 μm or more. The thickness of the PSA layer can be determined, for example, by measuring the thickness of the entire PSA sheet with a 1/1000 dial gauge and subtracting the thickness of the layers other than the PSA layer.

In the PSA sheet disclosed herein, the ratio (TA/TM) of the thickness TA [μm] of the PSA layer to the thickness TM [μm] of the metal mesh layer is suitably about 1.1 or more, preferably 2.0 or more, and more preferably 3.0 or more. As the ratio (TA/TM) increases, irregularities (steps) due to the metal mesh layer disposed on the first surface of the substrate layer can be easily absorbed by deforming a portion of the PSA layer on the substrate side. Therefore, the increase in the ratio (TA/TM) tends to improve the smoothness of the adhesive surface. Thus, the adhesiveness between the PSA layer and the adherend can be improved, and the heat transfer between the adherend and the PSA layer can be improved. In some embodiments, the ratio (TA/TM) may be 5.0 or higher, 7.0 or higher, 10 or higher, 15 or higher, or 20 or higher. The upper limit of the ratio (TA/TM) is not particularly limited, and may be, for example, 500 or less. In some embodiments, from the viewpoint of achieving a good balance between the heat transfer from the adherend to the metal mesh layer through the PSA layer and the heat transfer in the plane direction by the metal mesh layer itself, the ratio (TA/TM) is suitably 200 or less and may be 100 or less, 70 or less, 50 or less, or 30 or less. In an embodiment in which heat dissipation is more important, the ratio (TA/TM) may be 18 or less, 12 or less, 8.0 or less, or 4.0 or less. In an embodiment in which the PSA layer does not include a thermally conductive filler, the ratio (TA/TM) is preferably set to, for example, 50 or less. In an embodiment in which the PSA layer includes a thermally conductive filler, the ratio (TA/TM) is preferably, for example, 5.0 or more, and more preferably 10.0 or more.

The refractive index of the PSA layer is not particularly limited. In some embodiments, the refractive index of the PSA layer is preferably 1.510 or more, and may be 1.520 or more, 1.530 or more, 1.540 or more, 1.541 or more, 1.542 or more, 1.543 or more, or 1.545 or more. A high refractive index of the PSA layer can be an advantageous feature in a PSA sheet to be used in, for example, the optical field.

In an embodiment in which the PSA layer includes a thermally conductive filler, from the viewpoint of suppressing

a decrease in transparency caused by light scattering or the like at an interface between the thermally conductive filler and other components (mainly a PSA) in the PSA layer, it is preferable that the difference in the refractive index between the thermally conductive filler and the adhesive in the layer be small. The thermally conductive filler preferably used in the PSA sheet disclosed herein tends to have a higher refractive index than a general-purpose PSA. Therefore, from the viewpoint of increasing the transparency of the PSA layer, it is preferable to increase the refractive index of the PSA layer. From such a viewpoint, particularly in an embodiment in which the PSA layer includes a thermally conductive filler, the refractive index of the PSA layer is preferably 1.530 or more, and may be 1.540 or more or 1.545 or more.

From the viewpoint of suppressing the decrease in the transparency of the PSA layer caused by the light scattering or the like, in some embodiments in which the PSA layer includes a thermally conductive filler, it is preferable that a value obtained by subtracting the refractive index na of the PSA layer from the refractive index nf of the thermally conductive filler (hereinafter sometimes referred to as "refractive index difference (nf - na)") be within ±0.04. With the PSA layer having such a small refractive index difference (nf - na) between the PSA layer and the thermally conductive filler, a PSA sheet with good transparency can be easily realized. In some embodiments, the refractive index difference (nf - na) is preferably - 0.02 or more and 0.04 or less, and may be 0 or more and 0.03 or less, 0 or more and 0.02 or less, or 0 or more and 0.015 or less.

From the viewpoint of improving the transparency of the PSA sheet, the refractive index of the PSA layer when using aluminum hydroxide as the thermally conductive filler is preferably 1.545 or more, more preferably 1.548 or more, and still more preferably is 1.550 or more. The refractive index of the PSA layer when using magnesium hydroxide as the thermally conductive filler is preferably 1.542 or more, more preferably 1.545 or more, and still more preferably 1.547 or more.

The upper limit of the refractive index of the PSA layer is not particularly limited. From the viewpoint of balancing with other adhesive properties (for example, adhesive strength), it is usually appropriate that the refractive index of the adhesive layer be about 1.590 or less. In an embodiment in which the PSA layer includes a thermally conductive filler, from the viewpoint of reducing the refractive index difference (nf - na) and improving transparency, the refractive index of the PSA layer is preferably 1.585 or less, and more preferably 1.580 or less. When aluminum hydroxide is used as the thermally conductive filler, the refractive index of the PSA layer is preferably 1.575 or less, more preferably 1.570 or less, and still more preferably 1.565 or less. When magnesium hydroxide is used as the thermally conductive filler, the PSA layer preferably has a refractive index of 1.565 or less, more preferably 1.560 or less, and still more preferably 1.555 or less.

When the PSA sheet disclosed herein is implemented in the form of a double-sided PSA sheet having a PSA layer (second PSA layer) laminated on the second surface of the substrate, the thickness of the second PSA layer may be the same as or different from that of the PSA layer (first PSA layer) laminated on the first surface of the substrate. In one embodiment, the thickness of the second PSA layer can be equal to or less than the thickness of the first PSA layer. Further, the composition of the first PSA layer and the composition of the second PSA layer may be the same or different. In an embodiment in which the first PSA layer includes a thermally conductive filler, the composition of the second PSA layer can be, for example, a composition obtained by removing the thermally conductive filler from the composition of the first PSA layer.

Properties, etc., of PSA Sheet

The PSA sheet disclosed herein can exhibit transparency when the metal mesh layer has openings. The haze value of the PSA sheet can be, for example, 75% or less, preferably 60% or less, more preferably 50% or less, still more preferably 40% or less, and for example, 35% or less. In some embodiments where transparency is more important, the haze value of the PSA sheet may be, for example, 25% or less, 15% or less, 10% or less, or 5% or less. In some embodiments in which heat dissipation is more important, the haze value of the PSA sheet may be, for example, 7% or more, 12% or more, 17% or more, or 22% or more. As the PSA layer of such a PSA sheet, a PSA layer including a thermally conductive filler can be preferably used.

Here, the "haze value" refers to the ratio of diffused light transmittance to total light transmittance when a measurement object is irradiated with visible light. It is also called the cloudiness value. The haze value can be expressed by the equation below.

$$Th\ (\%) = Td/Tt \times 100$$

In the equation, Th is the haze value (%), Td is the diffused light transmittance, and Tt is the total light transmittance. The measurement of the haze value of the PSA sheet can be performed according to the method described in Examples described hereinbelow. The haze value can be adjusted by selecting, for example, the composition and

thickness of the PSA layer, the opening area ratio of the metal mesh layer, the composition and thickness of the substrate, and the like. The haze value of the PSA layer is measured in the same manner.

Although not particularly limited, the haze value of the PSA layer itself is usually suitably 90% or lower, preferably 80% or lower, or more preferably 75% or lower (e.g. 70% or lower). In a preferable embodiment, the PSA layer's haze value is 60% or lower, more preferably 50% or lower, or yet more preferably 40% or lower. The minimum haze value of the PSA layer is not particularly limited. From the standpoint of achieving a balance with other properties (e.g. adhesive strength, etc.), the PSA layer's haze value is usually 0.5% or higher, possibly 10% or higher, 20% or higher, or even 30% or higher. For instance, in an embodiment where the PSA layer includes a thermally conductive filler, the PSA layer's haze value can be 30% or higher, 35% or higher, 40% or higher, 50% or higher, 60% or higher, or even 65% or higher.

The transmittance of the PSA sheet disclosed herein is suitably 25% or more, preferably 45% or more, more preferably 65% or more, and still more preferably 80% or more (for example, 85% or more). The upper limit of the transmittance of the PSA sheet is not particularly limited, but from the viewpoint of balancing with other properties such as thermal conductivity and pressure-sensitive adhesiveness, the upper limit is usually suitably 99% or less, and may be 95% or less or 90% or less.

The transmittance of the PSA sheet can be measured at a measurement wavelength of 400 nm under a temperature condition of 23°C by using a commercially available transmittance meter (for example, a high-speed integrating sphere type spectral transmittance meter, model "DOT-3", manufactured by Murakami Color Research Laboratory Co., Ltd.). The transmittance can be adjusted by selecting, for example, the composition and thickness of the PSA layer, the opening area ratio of the metal mesh layer, the composition and thickness of the substrate, and the like. The transmittance of the PSA layer is measured in the same manner.

Although not particularly limited, the transmittance of the PSA layer alone is usually preferably 60% or more, more preferably 70% or more, and still more preferably 80% or more (for example, 85% or more). The upper limit of the transmittance of the PSA layer is not particularly limited, but from the viewpoint of balancing with other properties such as thermal conductivity and adhesiveness, the upper limit is usually suitably 99% or less, and may be 95% or less or 90% or less.

Applications

The PSA sheet provided by the present description has a metal mesh layer disposed between a substrate and a PSA layer. Accordingly, the PSA sheet is suitable for heat dissipation from a member brought into contact with the PSA sheet (for example, an adherent to which the PSA layer is attached) and for heat transfer through the PSA sheet.

The PSA sheet disclosed herein can be used, for example, in an electronic apparatus having a heat source such as an electronic component or a light source, and can contribute to improving the heat dissipation of the electronic apparatus. The heat dissipation target includes, for example, electronic elements such as semiconductor elements (integrated circuit (IC) chips, and the like), capacitors, coils, resistors, light-emitting diodes (LEDs), thyristors (rectifiers), motor components, inverters, power transmission components etc., secondary batteries, chargers, power electronics products etc., LED heat dissipation boards, heat dissipation materials for batteries, and the like, but these examples are not limiting.

The PSA sheet disclosed herein can be preferably used for heat dissipation of members, for example, in an embodiment of being attached to members constituting various electronic apparatuses. The PSA sheet is particularly suitable for heat dissipation in portable electronic apparatuses because heat can be dissipated while saving space. Here, being "portable" means not just providing simple mobility, but further providing a level of portability that allows an individual (average adult) to carry the device relatively easily. Examples of the portable devices referred to herein include portable electronic devices such as mobile phones, smartphones, tablet PCs, notebook PCs, various wearable devices, digital cameras, digital video cameras, acoustic equipment (portable music players, IC recorders, etc.), computing devices (calculators, etc.), portable game devices, electronic dictionaries, electronic notebooks, electronic books, automotive information systems, portable radios, portable televisions, portable printers, portable scanners and portable modems, and the like, but these examples are not limiting. The PSA sheet disclosed herein takes advantage of the feature that it has both heat dissipation and transparency, and can be particularly preferably used for heat dissipation in display devices such as a liquid crystal display and an organic EL (OLED) display among the electronic apparatuses (for example, the above-mentioned portable electronic apparatuses).

Examples

Several working examples related to the present invention are described below, but these specific examples are not to limit the present invention. In the description below, "parts" and "%" are by weight unless otherwise specified.

Example 1

Production of Substrate with Metal Mesh Layer

A copper-deposited PET film having a 2-μm-thick copper vapor deposition film on one side of a 100-μm-thick polyethylene terephthalate (PET) film was prepared. After forming a resist film on the copper vapor deposition film and exposing using a mask pattern, development, etching and resist layer removal were performed, and the copper vapor deposition film was processed into a lattice-shaped metal mesh layer (opening ratio 79%) having a width of 1 0 μm and a pitch of 78 μm (interval of 68 μm). Thus, a PET film with a metal mesh layer was produced.

Preparation of Press-sensitive Adhesive Composition

A mixture of 30 parts of n-butyl acrylate (BA), 30 parts of benzyl acrylate (product name "VISCOAT #160" manufactured by Osaka Organic Chemical Industry Ltd.), 6.5 parts of N-vinyl-2-pyrrolidone (NVP), and 1.5 parts of 4-hydroxybutyl acrylate (4HBA), 0.03 part of 1-hydroxycyclohexyl-phenyl ketone (manufactured by IGM Resins, product name: OMNIRAD 184) as a photopolymerization initiator, and 0.03 part of 2,2-dimethoxy-1,2-diphenylethan-1-one (manufactured by IGM Resins, product name: OMNIRAD 651) was irradiated with ultraviolet light in a nitrogen atmosphere to perform polymerization until the viscosity (BH viscometer, No. 5 rotor, 10 rpm (measuring temperature 30°C)) became about 10 Pa·s (polymerization rate 5%). Then, 32 parts of ethoxylated o-phenyl phenol acrylate (trade name "A-LEN-10" manufactured by Shin-Nakamura Chemical Co., Ltd.; refractive index 1.577, Tg 33°C) and 0.05 part of dipentaerythritol hexaacrylate (trade name "KAYARAD DPHA", manufactured by Nippon Kayaku Co., Ltd.) as a polyfunctional monomer were added and mixed thoroughly to prepare a PSA composition.

Preparation of PSA Layer

Two different release liners R1 and R2 were obtained, each having a release surface formed with a silicone-based release agent on one side of a polyester film. As the release liner R1, was used product name DIAFOIL MRF (38 μm thick) available from Mitsubishi Plastics, Inc. As the release liner R2, was used product name DIAFOIL MRE (38 μm thick) available from Mitsubishi Plastics, Inc.

The PSA composition A prepared above was applied to the release surface of release liner $R^1$ to form a 50 μm thick coating layer. Subsequently, to the surface of the coating layer was covered with release liner R2 with the release surface on the coating layer side to block oxygen from the coating layer. Using a chemical light lamp available from Toshiba Corporation, the laminate sheet (having a layered structure of release liner Rl/coating layer/release liner R2) was irradiated by UV at an intensity of 3 $mW/cm^2$ for 360 seconds to cure the coating layer and form a PSA layer. The intensity value was determined by an industrial UV checker (available from Topcon Corporation, product name UVR-T1 with light detector model number UD-T36) with peak sensitivity at 350 nm in wavelength.

A PSA sheet according to Example 1 was produced by peeling the release liner R2 from the laminated sheet to expose the PSA layer, and attaching the PSA layer to the metal mesh layer side of the PET film with a metal mesh layer. In this PSA sheet, the surface of the PSA layer is protected by the release liner R1.

Example 2

A total of 100 parts of magnesium hydroxide (manufactured by Konoshima Chemical Co., Ltd., trade name "MAGNESIUM HYDROXIDE #300", average particle diameter 6 μm) as a thermally conductive filler and 2.5 parts of a filler dispersing agent (manufactured by DKS Co., Ltd., trade name: "PLYSURF A212E") were added and uniformly mixed with 100 parts of the PSA composition A to prepare a PSA composition B. A PSA sheet according to the present example was prepared in the same manner as in the preparation of the PSA sheet according to Example 1, except that PSA composition B was used instead of PSA composition A.

Example 3

A 100-μm-thick PET film having no metal mesh layer was used in place of the PET film with a metal mesh layer used in Examples 1 and 2. In other respects, the PSA sheet according to the present example was prepared in the same manner as the PSA sheet according to Example 1.

Refractive Index

A refractive index of the thermally conductive filler used in the preparation of the PSA sheet according to

Example 2 and a refractive index of the PSA layer formed from the PSA composition B including the thermally conductive filler (PSA layer before bonding to a PET film with a metal mesh layer) were measured using a multi-wavelength Abbe refractometer (ATAGO Co., Ltd., model "DR-M2") under the conditions of a wavelength of 589 nm and 23°C. As a result, the refractive index of the thermally conductive filler (magnesium hydroxide) was 1.562, the refractive index of the PSA layer was 1.550, and the difference between the refractive indices was 0.012.

Evaluation of Heat Dissipation

The heat dissipation of the PSA sheet according to each example was evaluated by the method illustrated by FIG. 5.

That is, a planar heater 74 having a length of 25 mm, a width of 25 mm, and a thickness of 2 mm was embedded in the center of one surface of a plate-like polystyrene foam 72 having a length of 5 cm and a width of 10 cm and having a thickness sufficient for heat insulation. At this time, the surface of the planar heater 74 and the surface of the polystyrene foam 72 around the surface heater were set at the same height. The PSA sheet 50 according to each example was cut into a size of 5 cm in length and 10 cm in width, and the PSA layer 56 side was pressure-bonded to the planar heater 74 and the polystyrene foam 72 therearound. Next, a polarizing plate 62 having attached thereto a PSA layer having a length of 5 cm, a width of 10 cm, and a thickness of 150 μm and having a PSA layer having a thickness of about 25 μm was attached to the PSA sheet 50 on the substrate 52.

In an environment of 23°C and 50% RH, a power supply (not shown) of the planar heater 74 was turned on for 40 min, and then the surface temperature of the planar heater 74 was thereafter measured with a thermocouple 76. The lower surface temperature indicates a higher heat dissipation of the PSA sheet.

In FIG. 5, the PSA sheet 50 with a structure having a metal mesh layer 54 between the substrate 52 and the PSA layer 56 is used, but the PSA sheet according to Example 3 does not have the metal mesh layer 54. When the PSA sheets of Examples 1 and 2 were cut into a size of 5 cm in length and 10 cm in width, the cutting direction was parallel to the lattice pattern of the metal mesh layer.

Determination of Haze Value

From the PSA sheet according to each Example, the release liner $R^1$ was removed and the exposed adhesive face was applied to one face of an alkali glass with 0.1 % haze. The resultant was heated at 80°C for 5 minutes so that sufficient adhesive strength was exhibited to the alkali glass to prepare a test piece. Using a haze meter (MR-100 available from Murakami Color Research Laboratory Co., Ltd.), the haze value of the test piece was determined. For the measurement, the alkali glass bearing the PSA sheet was arranged so that the PSA layer faced the light source. The haze values were measured at three points of the PSA sheet (that is, n=3), each on a measurement area having a diameter of 20 mm. As the haze value of the alkali glass was 0.1%, the average values obtained by subtracting 0.1% from the measured values were regarded as the haze values of the PSA sheets. The results are shown under "Haze value" in Table 1.

[Table 1]

Table 1

| | Adhesive sheet | | | Evaluation | |
|---|---|---|---|---|---|
| | Polymer (parts) | Filler (parts) | Metal mesh layer | Surface temperature (°C) | Haze value (%) |
| Example 1 | 100 | 0 | Yes | 87.8 | 3.2 |
| Example 2 | 100 | 100 | Yes | 85.7 | 30.3 |
| Example 3 | 100 | 0 | No | 96.4 | 0.9 |

As shown in Table 1, with the PSA sheet of Example 1 having a configuration in which the metal mesh layer was disposed between the PSA layer and the substrate, the surface temperature of the planar heater could be lowered by about 9°C as compared to the PSA sheet of Example 3 having no metal mesh layer. That is, it was confirmed that the PSA sheet of Example 1 had higher heat dissipation performance than the PSA sheet of Example 3. With the sheet of Example 2 in which the thermally conductive filler was included in the PSA layer, an effect of further lowering the surface temperature was obtained. Further, as can be seen from the measurement results of the haze values shown in

Table 1, the PSA sheets of Examples 1 and 2 each had transparency, and among them, the PSA sheet of Example 1 had a low haze value and was excellent in transparency.

Although specific embodiments of the present invention have been described in detail above, these are merely for illustrations and do not limit the scope of claims. The art according to the claims includes various modifications and changes made to the specific embodiments illustrated above.

## Claims

1. A pressure-sensitive adhesive sheet comprising:

   a substrate;
   a pressure-sensitive adhesive layer laminated on a first surface of the substrate; and
   a metal mesh layer disposed between the substrate and the pressure-sensitive adhesive layer.

2. The pressure-sensitive adhesive sheet according to claim 1, wherein the metal mesh layer includes copper.

3. The pressure-sensitive adhesive sheet according to claim 1 or 2, wherein the pressure-sensitive adhesive layer includes a thermally conductive filler.

4. The pressure-sensitive adhesive sheet according to claim 3, wherein a difference in refractive index between the pressure-sensitive adhesive layer and the thermally conductive filler is within $\pm0.04$.

5. The pressure-sensitive adhesive sheet according to claim 3 or 4, wherein an amount of the thermally conductive filler in the pressure-sensitive adhesive layer is 70% by weight or less.

6. The pressure-sensitive adhesive sheet according to any one of claims 3 to 5, wherein the thermally conductive filler includes a hydrated metal compound.

7. The pressure-sensitive adhesive sheet according to any one of claims 1 to 6, wherein a ratio (TA/TM) of a thickness TA [$\mu$m] of the pressure-sensitive adhesive layer to a thickness TM [$\mu$m] of the metal mesh layer is 3.0 or more.

8. The pressure-sensitive adhesive sheet according to any one of claims 1 to 7, wherein the substrate is a resin film.

9. The pressure-sensitive adhesive sheet according to any one of claims 1 to 8, wherein a haze value of the pressure-sensitive adhesive sheet is 50% or less.

10. An electronic apparatus comprising the pressure-sensitive adhesive sheet according to any one of claims 1 to 9.

[Fig 1]

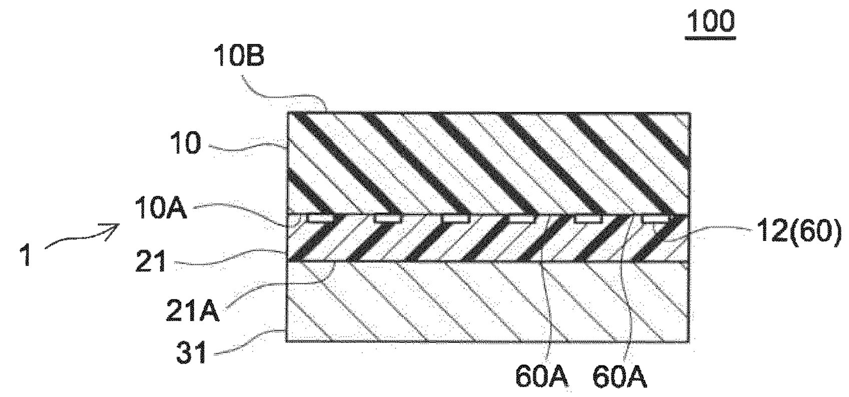
100
10B
10
10A
1
21
21A
31
12(60)
60A
60A

[Fig 2]

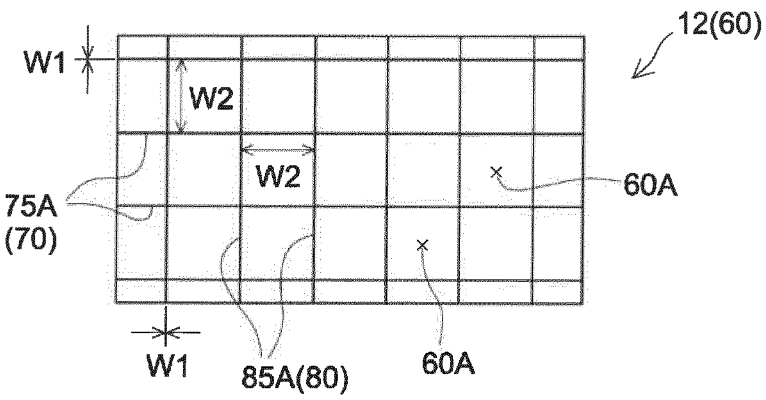
W1
W2
W2
12(60)
75A
(70)
60A
W1
85A(80)
60A

[Fig 3]

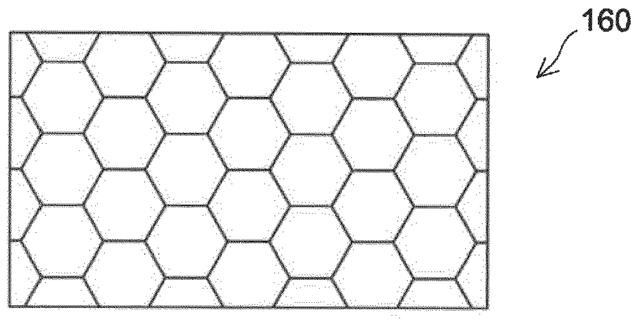


[Fig 4]

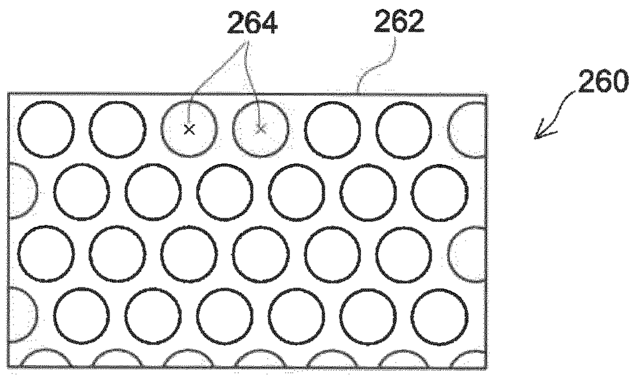

[Fig 5]

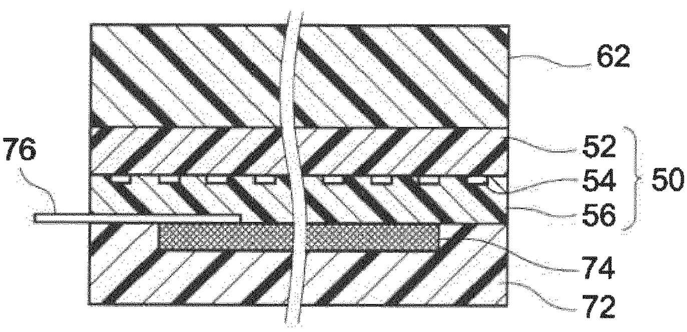

Europäisches Patentamt
European Patent Office
Office européen des brevets

# EUROPEAN SEARCH REPORT

Application Number
EP 20 18 0253

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br><br>Y | WO 2016/095185 A1 (LAIRD TECHNOLOGIES INC [US]; OU BAOQUAN [US])<br>23 June 2016 (2016-06-23)<br>* first and second paragraph;<br>page 2 *<br>* page 3 - page 4; figure 1 *<br>* page 5, paragraph 2 - page 6, paragraph 1 *<br>* page 6, paragraph 3 - page 7, paragraph 3 *<br>* page 9 - page 15; examples 1-5 *<br>* claims 1-16 *<br>----- | 1-10<br><br><br>6 | INV.<br>C09J11/04<br>C09J7/29<br>C08K3/00<br>C09J9/00<br>C08K3/22 |
| X<br><br>Y | US 2015/050853 A1 (PARK MIN SOO [KR] ET AL) 19 February 2015 (2015-02-19)<br>* page 1, paragraph 0005-0009 *<br>* page 3, paragraph 0033 *<br>* page 4, paragraph 0041-0042;0045; figures 1,2 *<br>* page 5, paragraph 0052 *<br>* claims 1-5,17 *<br>----- | 1-10<br><br>6 | |
| X<br><br>Y | JP 2016 110995 A (NITTO DENKO CORP)<br>20 June 2016 (2016-06-20)<br>* paragraph [0007] *<br>* paragraph [0010;0015] *<br>* paragraph [0029] *<br>* claims 1,4,5,8 *<br>----- | 1-10<br><br>6 | TECHNICAL FIELDS SEARCHED (IPC)<br>C09J<br>C08K |
| Y | EP 3 480 270 A1 (NITTO DENKO CORP [JP])<br>8 May 2019 (2019-05-08)<br>* page 1, paragraph 2 *<br>* page 17, paragraph 116-121 *<br>----- | 6 | |
| | -/-- | | |

1

The present search report has been drawn up for all claims

| Place of search | Date of completion of the search | Examiner |
|---|---|---|
| Munich | 13 October 2020 | Schlembach, Sandra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 20 18 0253

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JULIEN LOSTE ET AL: "Transparent polymer nanocomposites: An overview on their synthesis and advanced properties", PROGRESS IN POLYMER SCIENCE., vol. 89, 28 February 2019 (2019-02-28), pages 133-158, XP055735566, GB ISSN: 0079-6700, DOI: 10.1016/j.progpolymsci.2018.10.003 * pages 7-25 * ----- | 1-10 | |
| | | | TECHNICAL FIELDS SEARCHED (IPC) |

The present search report has been drawn up for all claims

1

| Place of search | Date of completion of the search | Examiner |
|---|---|---|
| Munich | 13 October 2020 | Schlembach, Sandra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 2 of 2

## ANNEX TO THE EUROPEAN SEARCH REPORT ON EUROPEAN PATENT APPLICATION NO. EP 20 18 0253

This annex lists the patent family members relating to the patent documents cited in the above-mentioned European search report. The members are as contained in the European Patent Office EDP file on
The European Patent Office is in no way liable for these particulars which are merely given for the purpose of information.

13-10-2020

| Patent document cited in search report | Publication date | Patent family member(s) | Publication date |
|---|---|---|---|
| WO 2016095185 A1 | 23-06-2016 | CN 105713529 A | 29-06-2016 |
| | | CN 205803383 U | 14-12-2016 |
| | | WO 2016095185 A1 | 23-06-2016 |
| US 2015050853 A1 | 19-02-2015 | CN 104350116 A | 11-02-2015 |
| | | EP 2857468 A1 | 08-04-2015 |
| | | JP 6075445 B2 | 08-02-2017 |
| | | JP 2015523921 A | 20-08-2015 |
| | | KR 20130134227 A | 10-12-2013 |
| | | TW 201415323 A | 16-04-2014 |
| | | US 2015050853 A1 | 19-02-2015 |
| | | WO 2013180492 A1 | 05-12-2013 |
| JP 2016110995 A | 20-06-2016 | JP 2016110995 A | 20-06-2016 |
| | | JP 2020142525 A | 10-09-2020 |
| | | TW 201627151 A | 01-08-2016 |
| EP 3480270 A1 | 08-05-2019 | CN 109749639 A | 14-05-2019 |
| | | EP 3480270 A1 | 08-05-2019 |
| | | JP 2019085441 A | 06-06-2019 |
| | | KR 20190049520 A | 09-05-2019 |
| | | US 2019127611 A1 | 02-05-2019 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2018171916 A
- JP 2007051271 A
- JP 2015205986 A


### Non-patent literature cited in the description


- Polymer Handbook. John Wiley & Sons, Inc, 1989